(19) Europäisches Patentamt / European Patent Office / Office européen des brevets

(11) **EP 3 863 831 B1**

(12) **EUROPEAN PATENT SPECIFICATION**

(45) Date of publication and mention
of the grant of the patent:
**19.02.2025 Bulletin 2025/08**

(21) Application number: **19794355.8**

(22) Date of filing: **08.10.2019**

(51) International Patent Classification (IPC):
**B29C 55/00** *(2006.01)*     **B65D 23/08** *(2006.01)*
**C08G 63/183** *(2006.01)*     **C08G 63/199** *(2006.01)*
**C08G 63/672** *(2006.01)*     **C08J 5/18** *(2006.01)*
**C08L 67/02** *(2006.01)*     **B29D 7/01** *(2006.01)*
**B29K 67/00** *(2006.01)*

(52) Cooperative Patent Classification (CPC):
(C-Sets available)
**C08L 67/02; B29D 7/01; C08G 63/183;
C08G 63/199; C08G 63/672; C08J 5/18;
C08L 67/025;** B29C 55/005; B29K 2067/00;
C08J 2367/02                (Cont.)

(86) International application number:
**PCT/US2019/055089**

(87) International publication number:
**WO 2020/076747 (16.04.2020 Gazette 2020/16)**

(54) **CRYSTALLIZABLE SHRINKABLE AND THERMOFORMABLE SHEETS MADE FROM REACTOR GRADE RESINS**

KRISTALLISIERBARE SCHRUMPFBARE UND THERMOFORMBARE FOLIEN AUS REAKTORFÄHIGEN HARZEN

FEUILLES RÉTRACTABLES ET THERMOFORMABLES CRISTALLISABLES FABRIQUÉES À PARTIR DE RÉSINES DE QUALITÉ RÉACTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2018 US 201862742719 P
20.12.2018 US 201862782617 P**

(43) Date of publication of application:
**18.08.2021 Bulletin 2021/33**

(73) Proprietor: **Eastman Chemical Company
Kingsport, TN 37660 (US)**

(72) Inventors:
• **PETERS, Mark, Allen
Jonesborough, TN 37659 (US)**
• **NAPIERALA, Jacob, E.
Johnson City, TN 37604 (US)**
• **LITTLE, Rondell, Paul, Jr.
Johnson City, TN 37615 (US)**
• **WILLIAMS, James, Carl
Blountville, TN 37617 (US)**

(74) Representative: **Ricker, Mathias
Wallinger Ricker Schlotter Tostmann
Patent- und Rechtsanwälte Partnerschaft mbB
Zweibrückenstraße 5-7
80331 München (DE)**

(56) References cited:
EP-A1- 2 365 025        EP-A1- 3 572 451
EP-B1- 1 439 201        WO-A1-99/47605
US-A1- 2009 227 735     US-A1- 2011 091 705
US-A1- 2014 162 042

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/02, C08L 67/02;**
**C08L 67/02, C08L 67/025**

**Description**

**FIELD OF THE INVENTION**

The present disclosure relates to crystallizable shrinkable films and thermoformable sheet(s) comprising polyester compositions which comprise residues of terephthalic acid, neopentyl glycol (NPG), 1,4-cyclohexanedimethanol (CHDM), ethylene glycol (EG), and diethylene glycol (DEG), in certain compositional ranges having certain advantages and improved properties.

**BACKGROUND OF THE INVENTION**

There is a commercial need for shrink films that have at least one of the following desirable shrink film properties: (1) low onset shrinkage temperature, (2) a shrinkage percentage which increases gradually and in a controlled manner with increasing temperature over the temperature range where shrinkage occurs, (3) a shrink force low enough to prevent crushing of the underlying container, (4) a high ultimate shrinkage (shrinkage at the highest temperature), e.g. 60% or greater shrinkage in the main shrinkage direction at 95°C, (5) low shrinkage in the direction orthogonal to the high shrinkage direction, (6) improved film toughness so as to prevent unnecessary fracturing, breaking, tearing, splitting, bubbling, or wrinkling of the film during manufacture and prior to and after shrinkage, and (7) recyclability.

There is a commercial need for thermoformable polyester sheet with good properties and recyclability.

US 2011/091705 A1, US 2014/162042 A1 and WO 99/47605 A1 disclose polyester compositions comprising terephthalic acid, ethylene glycol and cyclohexanedimethanol.

EP 3 572 451 A1 discloses polyester compositions from terephthalic acid, ethylene glycol, neopentyl glycol and diethylene glycol.

US 2009/227735 A1 discloses polyester compositions from terephthalic acid, ethylene glycol and cyclohexanedimethanol and diethylene glycol.

EP 2 365 025 A1 discloses polyester compositions from terephthalic acid, ethylene glycol, neopentyl glycol, diethylene glycol.

**BRIEF SUMMARY OF THE INVENTION**

It has been found that certain combinations of glycol monomers in a shrink film resin composition can produce a film with good shrink film performance and also be crystallizable such that it does not impact the recycling of the accompanying PET flake during recycling. These crystallizable shrink film resins can be processed with the PET bottle and end up as a component in the recyclable PET flake leaving the recycling process. It has also been found that the choice and quantity of specific combinations of glycol monomers are important to produce films with good shrink film properties and to produce a film that is crystallizable. The optimized polyester resin compositions of this disclosure are amorphous but crystallizable. As such, they exhibit good properties in film application including as shrink films, but they have high strain induced crystalline melting points, so they provide compatibility in recycling processes. The shrink film labels of the present disclosure do not have to be removed during the recycle process, and they do not impact the process.

The heat-shrinkable films must meet a variety of fitness for use criteria to perform in this disclosure. The films must be tough, must shrink in a controlled manner, and must provide enough shrink force to hold itself on the bottle without crushing the contents. In addition, when these labels are applied to polyester containers or bottles, these polyester shrink film labels must not interfere with the recycling process of the polyester containers or bottles. The shrink films of the present disclosure are advantageous because the label can be recycled with the bottles or containers. As such, the entire container or bottle, including the label, can be recycled and converted into new products without creating additional handling requirements or creating new environmental issues. The heat-shrinkable films have been made from a variety of raw materials to meet a range of material demands. This disclosure describes unique and unexpected effects measured with certain monomer combinations for shrink film resin compositions.

Polyester shrink film compositions have been used commercially as shrink film labels for food, beverage, personal care, household goods, etc. Often, these shrink films are used in combination with a clear polyethylene terephthalate (PET) bottle or container. The total package (bottle plus label) is then placed in the recycling process. In a typical recycling center, the PET and the shrink film material can end up together at the end of the process due to similarities in composition and density. Drying of the PET flake is required to remove residual water that remains with the PET through the recycling process. Typically, PET is dried at temperatures above 200°C. At those temperatures, typical polyester shrink film resins will soften and become sticky, often creating clumps with PET flakes. These clumps must be removed before further processing. These clumps reduce the yield of PET flake from the process and create an additional handling step.

It has been found, in this disclosure, film or sheet resin compositions with a certain combinations of glycol monomers can produce film or sheet with good performance properties and these compositions are also crystallizable such that they do not impact the recycling of the PET flake. These crystallizable film or sheet resins can be processed with recycled PET and end up as a component in the recyclable PET flake leaving the recycling process. It has also been found that the choice and quantity of specific combinations of glycol monomers are important to produce film or sheet with good performance properties and to produce a film or sheet that is crystallizable. In other words, the polyester compositions of the present disclosure are amorphous, but they are "crystallizable" in the sense that they have high strain induced crystalline melting points. As such, they exhibit good properties in film or sheet applications including shrink films, molded, thermoformed, or shaped parts and/or articles, but they also possess high strain induced crystalline melting points, so they can be recycled with PET, because when the recycled PET flakes are subjected to high temperature drying conditions, the crystallizable polyesters of the invention do not form clumps, which deter the normal mechanical operation of flaking, drying, and feeding of the flake into an extruder for further processing into (recycled)polyester pellets. Similarly, the sheet of the present disclosure does not have to be removed during the recycle process, and thus does not adversely impact the recycle process. (See, for example, https://www.thebalancesmb.com/recycling-polyethylene-terephthalate-pet-2877869.)

The invention is set forth in the appended claims. One embodiment of the present disclosure is a crystallizable film comprising an amorphous polyester composition comprising: at least one polyester which comprises: (a) a dicarboxylic acid component comprising: (i) about 70 to about 100 mole% of terephthalic acid residues; (ii) about 0 to about t30 mole% of aromatic and/or aliphatic dicarboxylic acid residues having up to 20 carbon atoms; and (b) a diol component comprising: about 75 mole% or greater of ethylene glycol residues and about 25 mole% or less of other glycols comprising:

(i) about 0.1 to less than about 24 mole% of neopentyl glycol residues; (ii) from greater than 0 to less than about 24 mole% of 1,4-cyclohexanedimethanol residues; (iii) about 1 to less than about 10 mole% of total diethylene glycol residues in the final polyester composition; wherein the total mole% of the dicarboxylic acid component is 100 mole%, and wherein the total mole% of the diol component is 100 mole%.

One embodiment of the present disclosure is a crystallizable film comprising an amorphous polyester composition comprising: at least one polyester which comprises:(a) a dicarboxylic acid component comprising: (i) about 70 to about 100 mole% of terephthalic acid residues; (ii) about 0 to about 30 mole% of aromatic and/or aliphatic dicarboxylic acid residues having up to 20 carbon atoms; and (b) a diol component comprising: about 80 mole% or greater of ethylene glycol residues and about 20 mole% or less of other glycols comprising: (i) about 5 to less than about 17 mole% of neopentyl glycol residues; (ii) about 2 to less than about 10 mole% of 1,4-cyclohexanedimethanol residues; (iii) about 1 to less than about 5 mole% of total diethylene glycol residues in the final polyester composition; wherein the total mole% of the dicarboxylic acid component is 100 mole%, and wherein the total mole% of the diol component is 100 mole%.

One embodiment of the present disclosure is a crystallizable film comprising a polyester composition comprising: at least one polyester which comprises: (a) a dicarboxylic acid component comprising: (i) about 70 to about 100 mole% of terephthalic acid residues; (ii) about 0 to about 30 mole% of aromatic and/or aliphatic dicarboxylic acid residues having up to 20 carbon atoms; and (b) a diol component comprising: (i) about 1 to about 30 mole% neopentyl glycol residues; (ii) about 1 to about less than 30 mole% of 1,4-cyclohexanedimethanol residues; (iii) about 1.5 to 6 mole % of residues of diethylene glycol; and wherein the remainder of the glycol component comprises: (iv) residues of ethylene glycol, and (v) 0 to 20 mole% of the residues of at least one modifying glycol; wherein the total mole% of the dicarboxylic acid component is 100 mole%, and wherein the total mole% of the glycol component is 100 mole%.

One embodiment of the present disclosure is a crystallizable film of any of the preceding embodiments, wherein the film is stretched in at least one direction and the stretched film has a strain induced crystalline melting point of 190°C or greater. One embodiment of the present disclosure is a crystallizable film of any of the preceding embodiments, wherein the film is stretched in at least one direction and the stretched film has a strain induced crystalline melting point of about 190°C to about 215°C.

One embodiment of the present disclosure is an extruded or calendared film comprising a crystallizable film of any of the preceding embodiments.

One embodiment of the present disclosure is a thermoformed sheet having a thickness of from about 0.25mm to about 6.4mm, comprising a polyester composition comprising: at least one polyester which comprises: (a) a dicarboxylic acid component comprising: (i) about 70 to about 100 mole% of terephthalic acid residues; (ii) about 0 to about 30 mole% of aromatic and/or aliphatic dicarboxylic acid residues having up to 20 carbon atoms; and (b) a diol component comprising: about 75 mole% or greater of ethylene glycol residues and about 25 mole% or less of other glycols comprising one or more of: (i) about 0.1 to less than about 24 mole% of neopentyl glycol residues; (ii) 0 to less than about 24 mole% of 1,4-cyclohexanedimethanol residues; (iii) about 1 to less than about 10 mole% of total diethylene glycol residues in the final polyester composition; wherein the total mole% of the dicarboxylic acid component is 100 mole%, and wherein the total mole% of the diol component is 100 mole%.

One embodiment of the present disclosure is a thermoformed sheet having a thickness of from about 0.25mm to about 6.4mm, comprising a polyester composition comprising: at least one polyester which comprises: (a) a dicarboxylic acid component comprising: (i) about 70 to about 100 mole% of terephthalic acid residues; (ii) about 0 to about 30 mole% of aromatic and/or aliphatic dicarboxylic acid residues having up to 20 carbon atoms; and (b) a diol component comprising: about 80 mole% or greater of ethylene glycol residues and about 20 mole% or less of other glycols comprising: (i) about 5 to less than about 17 mole% of neopentyl glycol residues; (ii)about 2 to less than about 10mole% of 1,4-cyclohexanedimethanol residues; (iii) about 1 to less than about 5 mole% of total diethylene glycol residues in the final polyester composition; wherein the total mole% of the dicarboxylic acid component is 100 mole%, and wherein the total mole% of the diol component is 100 mole%.

One embodiment of the present disclosure is a thermoformed sheet having a thickness of from about 0.25mm to about 6.4mm, comprising a polyester composition comprising: at least one polyester which comprises: (a) a dicarboxylic acid component comprising: (i) about 70 to about 100 mole% of terephthalic acid residues; (ii) about 0 to about 30 mole% of aromatic and/or aliphatic dicarboxylic acid residues having up to 20 carbon atoms; and (b) a diol component comprising: (i) about 1 to about 30 mole% neopentyl glycol residues; (ii) about 1 to about less than 30 mole% 1,4-cyclohexanedimethanol residues; and (iii) about 1.5 to about 6 mole% of residues of diethylene glycol; and wherein the remainder of the glycol component comprises: (iv) residues of ethylene glycol, and (v) 0 to 20 mole% of the residues of at least one modifying glycol; wherein the total mole% of the dicarboxylic acid component is 100 mole%, and wherein the total mole% of the glycol component is 100 mole%.

One embodiment of the present disclosure is a molded, thermoformed, or shaped article prepared from or comprising the sheet of any of the preceding embodiments.

In one embodiment of the present disclosure, the thermoformed sheet has a crystalline melting point of about 190° to about 225°C.

One embodiment of the present disclosure is an article chosen from a medical device packaging, medical packaging, healthcare supplies packaging, commercial foodservice product packaging, trays, containers, food pans, tumblers, storage boxes, bottles, food processors, blender and mixer bowls, utensils, water bottles, crisper trays, washing machine parts, refrigerator parts, vacuum cleaner parts, ophthalmic lenses and frames or toys prepared from or comprising the sheet of any of the preceding embodiments.

One embodiment of the present disclosure is a method of making a molded or thermoformed article or part from the sheet of any of the preceding embodiments comprising: A. heating the sheet comprising the polyester compositions of the present disclosure ; B. applying air pressure, vacuum and/or physical pressure to the heat-softened sheet; C. conforming the sheet by vacuum or pressure to a mold shape; D. cooling the sheet to a temperature below its Tg and E. removing the molded or thermoformed part or article from the mold.

One embodiment of the present disclosure is a polyester recycle stream comprising recycled poly(ethylene terephthalate) flake, having admixed therewith at least about 0.1 weight percent of crystallizable recycled shrink film or thermoformed sheet of the present disclosure.

The crystallizable compositions of the present disclosure thus present an advantageous component of a PET recycle stream insofar as such compositions can accompany PET in recycle streams without additional separation steps. Accordingly, in one embodiment of the present disclosure there is provided a polyester recycle stream, comprising recycled poly(ethylene terephthalate) flake, having admixed therewith at least about 0.1 weight percent of the crystallizable compositions of the present disclosure. In another embodiment, wherein said stream passes the "Critical Guidance Protocol for Clear PET Articles with Labels and Closures", dated April 11, 2019, Document No. PET-CG-02.

## BRIEF DESCRIPTION OF THE DRAWINGS

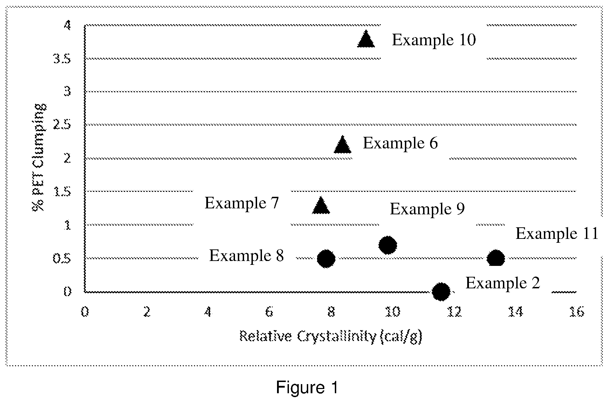

Figure 1 is a plot of % PET clumping versus relative crystallinity. The triangle points represent greater than 1% PET clumping. The circle points represent less than 1% PET clumping and thus pass the "Critical Guidance Protocol for Clear PET Articles with Labels and Closures", dated April 11, 2019, Document No. PET-CG-02.

## DETAILED DESCRIPTION

The present disclosure may be understood more readily by reference to the following detailed description of certain embodiments of the disclosure and the working examples. In accordance with the purpose(s) of this disclosure, certain embodiments of the disclosure are described in the Summary of the Invention and are further described herein below. Also, other embodiments of the disclosure are described herein.

Heat-shrinkable plastic films are used as coverings, to hold objects together, and as an outer wrapping for bottles, cans and other kinds of containers. For example, such films are used for covering the cap, neck, shoulder or bulge of bottles or the entire bottle; for the purpose of labeling, protection, parceling, or increasing the value of the product; and for other reasons. In addition, such films may be used as a covering to package such objects as boxes, bottles, boards, rods, or notebooks together in groups, and such films may also be attached closely as a wrapping. The uses mentioned above take advantage of the shrinkability and the internal shrink stress of the film.

Historically, Poly(vinyl chloride) (PVC) films dominated the shrink film market. However, polyester films have become a significant alternative because polyester films do not possess the environmental problems associated with PVC films. Polyester shrink films ideally would have properties very similar to PVC films so that the polyester films can serve as a "drop-in" replacement films and can be processed in existing shrink tunnel equipment. PVC film properties that are desired for duplication include the following: (1) a relatively low shrinkage onset temperature, (2) a total shrinkage which increases gradually and in a controlled manner with increasing temperature, (3) a low shrink force to prevent crushing of the underlying container, (4) a high total shrinkage (for example, 50% or greater), (5) an inherent film toughness so as to prevent unnecessary tearing and splitting of the film prior to and after shrinkage.

Heat-shrinkable films must meet a variety of fitness for use criteria in order to perform in this application. The films must be tough, must shrink in a controlled manner, and must provide enough shrink force to hold itself on the bottle without crushing the contents. In addition, when these labels are applied to polyester containers, they must not interfere with the recycling process for the PET bottle. In fact, it would be advantageous, if the label was also recyclable so the entire bottle can be recycled and converted into new products without creating additional handling requirements or create new environmental issues. Heat-shrinkable films have been made from a variety of raw materials to meet a range of material demands. This disclosure describes unique and unexpected effects measured with certain monomers combinations that improves the recyclability of the polyester shrink film label.

Polyester shrink film compositions are used commercially as shrink film labels for food, beverage, personal care, household goods, etc. Often, these shrink films are used in combination with clear polyethylene terephthalate (PET) bottles or containers. The total package (bottle plus label) is then placed in the recycling process. In a typical recycling center, the PET and the shrink film material often end up together at the end of the process due to similarities in composition and density. Drying of the PET flake is required to remove residual water that remains with the PET through the recycling process. Typically, during a recycling process, the PET is dried at temperatures above 200°C. At those temperatures, typical polyester shrink film resins will soften and become sticky, often creating clumps with PET flakes. These clumps must be removed before further processing. These clumps reduce the yield of PET flake from the process and create an additional handling step.

It has been found in the present disclosure that certain combinations of glycol monomers in a shrink film resin composition can produce a shrink film with good performance properties that is also crystallizable such that it does not impact the recycling of the PET flake during the recycling process. These crystallizable shrink film resins can be processed with the PET bottle and end up as a component in the recyclable PET flake leaving the recycling process. It has also been found that the choice and quantity of the specific combinations of glycol monomers are important to produce films with good shrink film properties and films that are crystallizable.

The term "polyester", as used herein, is intended to include "copolyesters" and is understood to mean a synthetic polymer prepared by the reaction of one or more difunctional carboxylic acids and/or multifunctional carboxylic acids with one or more difunctional hydroxyl compounds and/or multifunctional hydroxyl compounds, for example, branching agents. Typically, the difunctional carboxylic acid can be a dicarboxylic acid and the difunctional hydroxyl compound can be a dihydric alcohol, for example, glycols and diols. The term "glycol" as used herein includes, but is not limited to, diols, glycols, and/or multifunctional hydroxyl compounds, for example, branching agents. Alternatively, the difunctional carboxylic acid may be a hydroxy carboxylic acid, for example, p-hydroxybenzoic acid, and the difunctional hydroxyl compound may have an aromatic nucleus bearing 2 hydroxyl substituents, for example, hydroquinone. The term "residue", as used herein, means any organic structure incorporated into a polymer through a polycondensation and/or an esterification reaction from the corresponding monomer. The term "repeating unit", as used herein, means an organic structure having a dicarboxylic acid residue and a diol residue bonded through an ester group. Thus, for example, the dicarboxylic acid residues may be derived from a dicarboxylic acid monomer or its associated acid halides, esters, salts, anhydrides, and/or mixtures thereof. Furthermore, as used herein, the term "diacid" includes multifunctional acids, for example, branching agents. As used herein, therefore, the term "dicarboxylic acid" is intended to include dicarboxylic acids and any derivative of a dicarboxylic acid, including its associated acid halides, esters, half-esters, salts, half-salts, anhydrides, mixed anhydrides, and/or mixtures thereof, useful in a reaction process with a diol to make a polyester. As used herein, the term "terephthalic acid" is intended to include terephthalic acid itself and residues thereof as well as any derivative of terephthalic acid, including its associated acid halides, esters, half-esters, salts, half-salts, anhydrides, mixed anhydrides, and/or mixtures thereof or residues thereof useful in a reaction process with a diol to make a polyester.

The polyesters used in the present disclosure typically can be prepared from dicarboxylic acids and diols which react in substantially equal proportions and are incorporated into the polyester polymer as their corresponding residues. The polyesters of the present disclosure, therefore, can contain substantially equal molar proportions of acid residues (100 mole%) and diol (and/or multifunctional hydroxyl compound) residues (100 mole%) such that the total moles of repeating units is equal to 100 mole%. The mole percentages provided in the present disclosure, therefore, may be based on the total moles of acid residues, the total moles of diol residues, or the total moles of repeating units. For example, a polyester containing 10 mole% isophthalic acid, based on the total acid residues, means the polyester contains 10 mole% isophthalic acid residues out of a total of 100 mole% acid residues. Thus, there are 10 moles of isophthalic acid residues among every 100 moles of acid residues. In another example, a polyester containing 25 mole% 1,4-cyclohexanedimethanol, based on the total diol residues, means the polyester contains 25 mole% 1,4-cyclohexanedimethanol residues out of a total of 100 mole% diol residues. Thus, there are 25 moles of 1,4-cyclohexanedimethanol residues among every 100 moles of diol residues.

In certain embodiments, terephthalic acid or an ester thereof, for example, dimethyl terephthalate or a mixture of terephthalic acid residues and an ester thereof can make up a portion or all of the dicarboxylic acid component used to form the polyesters useful in the present disclosure. In certain embodiments, terephthalic acid residues can make up a portion or all of the dicarboxylic acid component used to form the polyesters useful in this disclosure. For the purposes of this disclosure, the terms "terephthalic acid" and "dimethyl terephthalate" are used interchangeably herein. In one embodiment, dimethyl terephthalate is part or all of the dicarboxylic acid component used to make the polyesters useful in the present disclosure. In embodiments, ranges of from 70 to 100 mole%; or 80 to 100 mole%; or 90 to 100 mole%; or 99 to 100 mole%; or 100 mole% terephthalic acid and/or dimethyl terephthalate and/or mixtures thereof may be used.

In addition to terephthalic acid, the dicarboxylic acid component of the polyesters useful in the present disclosure can comprise up to 30 mole%, up to 20 mole%, up to 10 mole%, up to 5 mole%, or up to 1 mole% of one or more modifying aromatic dicarboxylic acids. Yet another embodiment contains 0 mole% of modifying aromatic dicarboxylic acids. Thus, if present, it is contemplated that the amount of one or more modifying aromatic dicarboxylic acids can range from any of these preceding endpoint values including, for example, 0.01 to 10 mole%, from 0.01 to 5 mole% and from 0.01 to 1 mole%. In one embodiment, modifying aromatic dicarboxylic acids that may be used in the present disclosure include but are not limited to those having up to 20 carbon atoms, and which can be linear, para-oriented, or symmetrical. Examples of modifying aromatic dicarboxylic acids which may be used in this disclosure include, but are not limited to, isophthalic acid, 4,4'-biphenyldicarboxylic acid, 1,4-, 1,5-, 2,6-, 2,7-naphthalenedicarboxylic acid, and trans-4,4'-stilbenedicarboxylic acid, and esters thereof. In one embodiment, the modifying aromatic dicarboxylic acid is isophthalic acid.

The carboxylic acid component of the polyesters useful in the present disclosure can be further modified with up to 10 mole%, such as up to 5 mole% or up to 1 mole% of one or more aliphatic dicarboxylic acids containing 2-16 carbon atoms, for example, cyclohexanedicarboxylic, malonic, succinic, glutaric, adipic, pimelic, suberic, azelaic and/or dodecanedioic dicarboxylic acids. Certain embodiments can also comprise 0.01 to 10 mole%, such as 0.1 to 10 mole%, 1 or 10 mole%, 5 to 10 mole% of one or more modifying aliphatic dicarboxylic acids. Yet another embodiment contains 0 mole% of modifying aliphatic dicarboxylic acids. The total mole% of the dicarboxylic acid component is 100 mole%. In one embodiment, adipic acid and/or glutaric acid are provided in the modifying aliphatic dicarboxylic acid component of the polyesters and are useful in the present disclosure.

Esters of terephthalic acid and the other modifying dicarboxylic acids or their corresponding esters and/or salts may be used instead of the dicarboxylic acids. Suitable examples of dicarboxylic acid esters include, but are not limited to, the dimethyl, diethyl, dipropyl, diisopropyl, dibutyl, and diphenyl esters. In one embodiment, the esters are chosen from at least one of the following: methyl, ethyl, propyl, isopropyl, and phenyl esters.

In one embodiment, the molar ratio of cis/trans 1,4-cyclohexandimethanol can vary within the range of 50/50 to 0/100, for example, between 40/60 to 20/80.

The diol component of the polyester compositions useful in the present disclosure can include, but is not limited to, compositions wherein the sum of the residues of 1,4-cyclohexanedimethanol and residues of neopentyl glycol in the final polyester composition is from 1 to 30 mole%, or from 1 to 25 mole%, 1 to 20 mole%, or from 1 to 15 mole%, or from 1 to 10 mole%, or from 2 to 30 mole%, or from 2 to 25 mole%, or from 2 to 20 mole%, or from 2 to 15 mole%, or from 2 to 10 mole%, or from 3 to 30 mole%, or from 3 to 25 mole%, or from 3 to 20 mole%, or from 3 to 15 mole%, or from 3 to 10 mole%, 4 to 30 mole%, or from 4 to 25 mole%, 4 to 20 mole%, or from 4 to 15 mole%, or from 4 to 10 mole%, 5 to 30 mole%, or from 5 to 25 mole%, 5 to 20 mole%, or from 5 to 15 mole%, or from 5 to 10 mole%, 6 to 30 mole%, or from 6 to 25 mole%, 6 to 20 mole%, or from 6 to 15 mole%, or from 6 to 10 mole%, 7 to 30 mole%, or from 7 to 25 mole%, 7 to 20 mole%, or from 7 to 15 mole%, or from 7 to 10 mole%, 8 to 30 mole%, or from 8 to 25 mole%, 8 to 20 mole%, or from 8 to 15 mole%, or from 8 to 10 mole%, 9 to 30 mole%, or from 9 to 25 mole%, 9 to 20 mole%, or from 9 to 15 mole%, or from 9 to 10 mole%, 10 to 30 mole%, or from 10 to 25 mole%, 10 to 20 mole%, or from 10 to 15 mole%, or from 11 to 30 mole%, 11 to 30 mole%, or from 11 to 25 mole%, 11 to 20 mole%, or from 11 to 15 mole%, or from 12 to 30 mole%, 12 to 25 mole%, or from 12 to 20 mole%, 12 to 15 mole%, or from 13 to 30 mole%, or from 13 to 25 mole%, 13 to 20 mole%, or from 13 to 15 mole%, 14 to 30 mole%, or from 14 to 25 mole%, or from 14 to 20 mole%, 14 to 15 mole%, or from 15 to 30 mole%, 15 to 25 mole%, or from 15 to 20 mole%, or from 16 to 20 mole%, 18 to 20 mole%, or from 10 to 18 mole%, 16 to 18 mole%, or from 12 to 16 mole%, or from 16 to 20 mole%, or from 14 to 18 mole%, or from 11 to 30 mole%, or from 13 to 30 mole%, or from 14 to 30 mole%, or from 10 to 29 mole%, or from 11 to 29 mole%, or from 12 to 29 mole%, or from 13 to 29 mole%, or from 14 to 29 mole%, or from 15 to 29 mole%, or from 10 to 28 mole%, or from 11 to 28 mole%, or from 12 to 28 mole%, or from 13 to 28 mole%, or from 14 to 28 mole%, or from 15 to 28 mole%. In one embodiment, the sum of residues of 1,4-cyclohexanedimethanol and residues of neopentyl glycol in the final polyester composition can be from 1 to 16 mole%, 2 to 14 mole%, 4 to 15 mole%, or from 2 to 21 mole%, or from 2 to less than 20 mole%, or from 4 to 20 mole%, or from 5 to 18 mole%, or from 10 to 21 mole%, or from 12 to 21 mole%, wherein the total mole% of the diol component is 100 mole%.

In one embodiment, the diol component of the polyester compositions useful in this disclosure can contain 1 to 17 mole% of neopentyl glycol based on the total mole% of the diol component being 100 mole%. In one embodiment, the diol component of the polyester compositions useful in this disclosure can contain 5 to 20 mole% of neopentyl glycol based on the total mole% of the diol component being 100 mole%. In one embodiment, the diol component of the polyester compositions useful in this disclosure can contain 10 to 20 mole% of neopentyl glycol based on the total mole% of the diol component being 100 mole%. In one embodiment, the diol component of the polyester compositions useful in this disclosure can contain 10 to 15 mole% of neopentyl glycol based on the total mole% of the diol component being 100 mole%.

In one embodiment, the diol component of the polyester compositions useful in the present disclosure can contain from 0.1 to 20 mole%, or from 2 to 20 mole%, or from 0.01 to 15 mole%, or from 0.01 to 14 mole%, or from 0.01 to 13 mole%, or from 0.01 to 12 mole%, or from 0.01 to 11 mole%, or 0.01 to 10 mole%, or from 0.01 to 9 mole%, or from 0.01 to 8 mole%, or from 0.01 to 7 mole%, or from 0.01 to 6 mole%, or from 0.01 to 5 mole%, 3 to 15 mole%, or from 3 to 14 mole%, or from 3 to 13 mole%, or from 3 to 12 mole%, or from 3 to 11 mole%, or 3 to 10 mole%, or from 3 to 9 mole%, or from 3 to 8 mole%, or from 3 to 7 mole%, or from 2 to 10 mole%, or from 2 to 9 mole%, or from 2 to 8 mole%, or from 2 to 7 mole%, or from 2 to 5 mole%, or from 1 to 7 mole%, or from 1 to 5 mole%, or from 1 to 3 mole%, of 1,4-cyclohexanedimethanol residues, based on the total mole% of the diol component being 100 mole%.

In one embodiment, the diol component of the polyester compositions useful in the present disclosure can contain 0.01 to 15 mole% of 1,4-cyclohexanedimethanol residues based on the total mole% of the diol component being 100 mole%. In one embodiment, the diol component of the polyester compositions useful in this disclosure can contain from greater than 0 to less than 15 mole% of 1,4-cyclohexanedimethanol residues based on the total mole% of the diol component being 100 mole%. In one embodiment, the diol component of the polyester compositions useful in this disclosure can contain 0.01 to 10 mole% of 1,4-cyclohexanedimethanol residues based on the total mole% of the diol component being 100 mole%. In one embodiment, the diol component of the polyester compositions useful in this disclosure can contain 0.01 to 5 mole% of 1,4-cyclohexanedimethanol residues based on the total mole% of the diol component being 100 mole%.

It should be understood that some other diol residues may be formed *in situ* during processing. In one embodiment, the diol component of the polyester compositions as recited in this disclosure can contain diethylene glycol residues formed *in situ* during processing or intentionally added, or both. For example, in one embodiment, the polyester compositions useful in this disclosure can contain diethylene glycol residues from 2 to less than 10 mole%, or from 2 to 9 mole%, or 3 to less than 10 mole%, or from 3 to 9 mole%, or 4 to less than 10 mole%, or from 4 to 9 mole%, or, from 5 to less than 10 mole%, or from 5 to 9 mole%, based on the total mole% of the diol component being 100 mole%.

In one embodiment, the total amount of diethylene glycol residues present in the polyester compositions useful in the present disclosure, whether or not formed in situ during processing or intentionally added or both, can be from 4 mole% or less, or from 3.5 mole% or less, or from 3.0 mole% or less, or from 2.5 mole% or less, or from 2.0 mole% or less, or from 1.5 mole% or less, or from 1 to 4 mole%, or from 1 to 3 mole%, or from 1 to 2 mole% of diethylene glycol residues, or from 2 to 8 mole%, or from 2 to 7 mole%, or from 2 to 6 mole%, or from 2 to 5 mole%, or from 3 to 8 mole%, or from 3 to 7 mole%, or from 3 to 6 mole%, or from 3 to 5 mole%, based on the total mole% of the diol component being 100 mole%.

In one embodiment, the polyester portion of the polyester compositions useful in the present disclosure can contain 75 mole% or greater, or 80 mole% or greater, or 85 mole% or greater, or 90 mole% or greater, or 95 mole% or greater, or from 75 to 85 mole% of ethylene glycol residues, based on the total mole% of the diol component being 100 mole%.

In one embodiment, the diol component of the polyester compositions useful in the present disclosure can contain up to 20 mole%, or up to 19 mole%, or up to 18 mole%, or up to 17 mole%, or up to 16 mole%, or up to 15 mole %, or up to 14 mole %, or up to 13 mole %, or up to 12 mole %, or up to 11 mole %, or up to 10 mole%, or up to 9 mole%, or up to 8 mole%, or up to 7 mole%, or up to 6 mole%, or up to 5 mole %, or up to 4 mole %, or up to 3 mole %, or up to 2 mole %, or up to 1 mole %, or less of one or more modifying diols (modifying diols are defined as diols which are not ethylene glycol, diethylene glycol, neopentyl glycol, or 1,4-cyclohexanedimethanol). In certain embodiments, the polyester compositions useful in this disclosure can contain 10 mole% or less of one or more modifying diols. In certain embodiments, the polyesters useful in this disclosure can contain 5 mole% or less of one or more modifying diols. In certain embodiments, the polyesters useful in this disclosure can contain 3 mole% or less of one or more modifying diols. In another embodiment, the polyesters useful in this disclosure can contain 0 mole % modifying diols. It is contemplated, however, that some other diol residues may form *in situ* so that residual amounts formed *in situ* are also an embodiment of this disclosure.

In embodiments, modifying diols for use in the polyesters, if used, as defined herein contain 2 to 16 carbon atoms. Examples of modifying diols include, but are not limited to, 1,2-propanediol, 1,3-propanediol, isosorbide, 1,4-butanediol, 1,5-pentanediol, 1,6-hexanediol, p-xylene glycol, polytetramethylene glycol, 2,2,4,4-tetramethyl-1,3-cyclobutanediol (TMCD) and mixtures thereof. In one embodiment, isosorbide is a modifying diol. In another embodiment, the modifying diols include, but are not limited to, at least one of 1,3-propanediol and 1,4-butanediol. In one embodiment, 1,3-propanediol and/or 1,4-butanediol can be excluded. If 1,4- or 1,3-butanediol are used, greater than 4 mole% or greater than 5 mole % can be provided in one embodiment. In one embodiment, at least one modifying diol is 1,4-butanediol which present in the amount of 5 to 25 mole%. In certain embodiments, the polyester compositions contain no added modifying diols.

In one embodiment, the polyester compositions useful in the present disclosure can comprise at least one chain extender. Suitable chain extenders include, but are not limited to, multifunctional (including, but not limited to, bifunctional) isocyanates, multifunctional epoxides, including, for example, epoxylated novolacs, and phenoxy resins. In certain embodiments, chain extenders may be added at the end of the polymerization process or after the polymerization process. If added after the polymerization process, chain extenders can be incorporated by compounding or by addition during conversion processes such as injection molding or extrusion.

In certain embodiments, the amount of chain extender used can vary depending on the specific monomer composition used and the physical properties desired but is generally about 0.1 percent by weight to about 10 percent by weight, such as about 0.1 to about 5 percent by weight, based on the total weight of the polyester.

It is contemplated that polyester compositions useful in the present disclosure can possess at least one of the inherent viscosity ranges described herein and at least one of the monomer ranges for the polyester compositions described herein, unless otherwise stated. It is also contemplated that polyester compositions useful in the present disclosure can possess at least one of the $T_g$ ranges described herein and at least one of the monomer ranges for the polyester compositions described herein, unless otherwise stated. It is also contemplated that polyester compositions useful in the present disclosure can possess at least one of the inherent viscosity ranges described herein, at least one of the $T_g$ ranges described herein, and at least one of the monomer ranges for the polyester compositions described herein, unless otherwise stated.

For embodiments of this disclosure, the polyester compositions useful in this disclosure can exhibit at least one of the following inherent viscosities as determined in 60/40 (wt/wt) phenol/ tetrachloroethane at a concentration of 0.5 g/dL at 25°C: 0.50 to 1.2 dL/g; 0.50 to 1.0 dL/g; 0.50 to 0.90 dL/g; 0.50 to 0.80 dL/g; 0.55 to 0.80 dL/g; 0.60 to 0.80 dL/g; 0.65 to 0.80 dL/g; 0.70 to 0.80 dL/g; 0.50 to 0.75 dL/g; 0.55 to 0.75 dL/g; or 0.60 to 0.75 dL/g.

The glass transition temperature and the strain induced crystalline melting point ($T_g$ and $T_m$ respectively) of the polyesters is determined using a TA DSC 2920 from Thermal Analyst Instrument at a scan rate of 20°C/min. $T_m$ was measured on the first heat of stretched samples and $T_g$ was measured during the 2nd heating step. Additionally, samples could be crystallized in a forced air oven at 170°C for 2h and then analyzed with DSC. For all samples, a crystalline melting point is typically NOT present during the second heat of the DSC scan with a heating rate of 20° C/min.

In certain embodiments, the oriented films, shrink films, or thermoformed sheets of this disclosure comprise polyesters/polyester compositions wherein the polyester has a $T_g$ of 60 to 80°C; 70 to 80°C; 65 to 80°C; 72 to 77°C, or 65 to 75°C. In certain embodiments, the inherent viscosity of the polyester is from 0.68 to 0.75 dL/g as determined in 60/40 (wt/wt) phenol/ tetrachloroethane at a concentration of 0.5 g/dL at 25°C, and the polyester has a $T_g$ of from 72°C to 77°C as determined using a TA DSC 2920 from Thermal Analyst Instrument at a scan rate of 20°C/min.

In certain embodiments, these $T_g$ ranges can be met with or without at least one plasticizer being added during polymerization or during extrusion or during compounding.

In embodiments of the present disclosure, certain oriented films and/or shrinkable films comprising the polyesters and/or polyester compositions useful in this disclosure can have a unique combination of all of the following properties: good stretchability, controlled shrinkage properties, certain toughness, certain inherent viscosities, certain glass transition temperatures ($T_g$), certain strain induced crystalline melting points, certain flexural modulus, certain densities, certain tensile modulus, certain surface tension, good melt viscosity, good clarity, and good color.

In one embodiment, certain polyester compositions useful in this disclosure can be visually clear. The term "visually clear" is defined herein as an appreciable absence of cloudiness, haziness, and/or muddiness, when inspected visually.

The polyester portion of the polyester compositions useful in this disclosure can be made by processes known from the literature, for example, by processes in homogenous solution, by transesterification processes in the melt, and by two phase interfacial processes. Suitable methods include, but are not limited to, the steps of reacting one or more dicarboxylic acids with one or more diols at a temperature of 100°C. to 315°C. at a pressure of 0.1 to 760 mm Hg for a time sufficient to form a polyester. See U.S. Pat. No. 3,772,405 for methods of producing polyesters.

In certain embodiments, the polyesters may be prepared by condensing the dicarboxylic acid or dicarboxylic acid ester with the diol in the presence of a catalyst at temperatures that are increased gradually during the course of the condensation in an inert atmosphere, and conducting the condensation at low pressure during the latter part of the condensation, as described in further detail in U.S. Pat. No. 2,720,507.

In some embodiments, during the process for making the polyesters useful in the present disclosure, certain agents which colorize the polymer can be added to the melt including toners or dyes. In one embodiment, a bluing toner is added to the melt in order to reduce the b* of the resulting polyester polymer melt phase product. Such bluing agents include blue inorganic and organic toner(s) and/or dyes. In addition, red toner(s) and/or dyes can also be used to adjust the a* color. Organic toner(s), *e.g.*, blue and red organic toner(s), such as those toner(s) described in U.S. Pat. Nos. 5,372,864 and 5,384,377, can be used. The organic toner(s) can be fed as a premix composition. The premix composition may be a neat blend of the red and blue compounds or the composition may be predissolved or slurried in one of the polyester's raw materials, *e.g.*, ethylene glycol.

The total amount of toner components added can depend on the amount of inherent yellow color in the base polyester and the efficacy of the toner. In one embodiment, a concentration of up to about 15 ppm of combined organic toner components and a minimum concentration of about 0.5 ppm can be used. In one embodiment, the total amount of bluing additive can range from 0.5 to 10 ppm. In an embodiment, the toner(s) can be added to the esterification zone or to the polycondensation zone. Preferably, the toner(s) are added to the esterification zone or to the early stages of the polycondensation zone, such as to a prepolymerization reactor.

In embodiments, the polyester compositions can also contain from 0.01 to 25% by weight of the overall composition common additives such as, slip agents, anti-block agents, mold release agents, flame retardants, plasticizers, glass bubbles, nucleating agents, stabilizers, including but not limited to, UV stabilizers, thermal stabilizers, and/or reaction products thereof, fillers, and impact modifiers. Examples of commercially available impact modifiers include, but are not limited to, ethylene/propylene terpolymers, functionalized polyolefins such as those containing methyl acrylate and/or glycidyl methacrylate, styrene-based block copolymeric impact modifiers, and various acrylic core/shell type impact modifiers. Residues of such additives are also contemplated as part of the polyester composition.

In one embodiment, the films and the shrink films according to the present disclosure may contain from 0.01 to 10 weight percent of a polyester plasticizer such as those described in U.S. Patent No. 10,329,393, incorporated herein by reference. In one embodiment, the shrink films can contain from 0.01 to 10 weight percent of the polyester plasticizer compounded in the copolyester of the invention.

In one aspect, the present disclosure relates to shrink film(s), extruded sheet, thermoformed articles, and molded article(s) comprising the polyester compositions of this disclosure. The methods of forming the polyesters compositions into film(s) and/or sheet(s) are well known in the art. Examples of sheet(s) useful the present disclosure include but not are limited to extruded sheet(s), compression molded film(s), calendered film(s) and/or sheet(s), solution casted film(s) and/or sheet(s). In one aspect, methods of making film and/or sheet useful to produce the shrink films of the present disclosure include but are not limited to extrusion, compression molding, calendering, and solution casting.

In one embodiment, the polyester compositions useful in this disclosure are made into film using any method known in the art to produce films from polyesters, for example, solution casting, extrusion, compression molding, or calendering. (See, for example, U.S. Patent Nos. 6,846,440; 6,551,699; 6,551,688; and 6,068910).

In one embodiment, the as-formed film is then oriented in one or more directions (*e.g.*, monoaxially and/or biaxially oriented film). This orientation of the film can be performed by any method known in the art using standard orientation conditions. For example, the oriented films of the disclosure can be made from films having a thickness of about 100 to 400 microns, for example, extruded, cast or calendered films, which can be oriented at a ratio of 5:1 to 3:1 at a temperature of from $T_g$ to $T_g$ +55°C or from 70°C to 125°C, for example, at a ratio of 5:1 or of 3:1 at a temperature from 70°C to 100°C, and which can be oriented to a thickness of 20 to 80 microns. In one embodiment, the orientation of the initial pre-shrunk film can be performed on a tenter frame according to these orientation conditions.

The shrink films of the present disclosure can have an onset of shrinkage temperature of from about 55° to about 80°C, or about 55° to about 75°C, or about 55° to about 70°C. Onset of shrinkage temperature is the temperature at which the beginning of of shrinking occurs.

In certain embodiments, the polyester compositions useful in the present disclosure can have densities of 1.6 g/cc or less, or 1.5 g/cc or less, or 1.4 g/cc or less, or 1.1 g/cc to 1.5 g/cc, or 1.2 g/cc to 1.4 g/cc, or 1.2 g/cc to 1.35 g/cc.

In one embodiment, the density of the films is reduced by introducing many small voids or holes into the film or shaped article. This process is called "voiding" and may also be referred to as "cavitating" or "microvoiding". Voids are obtained by incorporating about 1 to about 50 weight% of small organic or inorganic particles (including glass microspheres) or "inclusions" (referred in the art as "voiding" or "cavitation" agents) into a matrix polymer and orienting the polymer by stretching in at least one direction. During stretching, small cavities or voids are formed around the voiding agent. When voids are introduced into polymer films, the resulting voided film not only has a lower density than the non-voided film, but also becomes opaque and develops a paper-like surface. This surface also has the advantage of increased printability; that is, the surface is capable of accepting many inks with a substantially greater capacity over a non-voided film. Typical examples of voided films are described in U.S. Patent No.'s 3,426,754; 3,944,699; 4,138,459; 4,582,752; 4,632,869; 4,770,931; 5,176,954; 5,435,955; 5,843,578; 6,004,664; 6,287,680; 6,500,533; 6,720,085; U.S. Patent Application Publication No.'s 2001/0036545; 2003/0068453; 2003/0165671; 2003/0170427; Japan Patent Application No.'s 61-037827; 63-193822; 2004-181863; European Patent No. 0 581 970 B1, and European Patent Application No. 0 214 859 A2.

In certain embodiments, the as-extruded films are oriented while they are stretched. The oriented films or shrinkable films of the present disclosure can be made from films having any thickness depending on the desired end-use. The desirable conditions are, in one embodiment, where the oriented films and/or shrinkable films can be printed with ink for applications including labels, photo films which can be adhered to substrates such as paper, and/or other applications that it may be useful in or shrunk to encompass the outside of a bottle or container. It may be desirable to coextrude the polyesters useful in the present disclosure with another polymer, such as PET, to make the films useful in making the oriented films and/or shrink films of this disclosure. One advantage of doing the latter is that a tie layer may not be needed in some embodiments.

In one embodiment, the monoaxially and biaxially oriented films of the present disclosure can be made from films having a thickness of about 100 to 400 microns, for example, extruded, cast or calendered films, which can be stretched at a ratio of 6.5:1 to 3:1 at a temperature of from the $T_g$ of the film to the $T_g + 55°C.$, and which can be stretched to a thickness of 20 to 80 microns. In one embodiment, the orientation of the initial as-extruded film can be performed on a tenter frame according to these orientation conditions. The shrink films of the present disclosure can be made from the oriented films of this disclosure.

In certain embodiments, the shrink films of the present disclosure have gradual shrinkage with little to no wrinkling. In certain embodiments, the shrink films of the present disclosure have no more than 40% shrinkage in the transverse direction per 5°C temperature increase increment.

In certain embodiments of the present disclosure, the shrink films of this disclosure have shrinkage in the machine direction of from 10% or less, or 5% or less, or 3% or less, or 2% or less, or no shrinkage when immersed in water at 65°C for 10 seconds. In certain embodiments of the present disclosure, the shrink films of this disclosure have shrinkage in the machine direction of from -10% to 10%, -5% to 5%, or -5% to 3%, or -5% to 2%, or -4% to 4%, or -3% to 4% or -2% to 4%, or -2% to 2.5%, or -2% to 2%, or 0 to 2%, or no shrinkage, when immersed in water at 65°C for 10 seconds. Negative machine direction shrinkage percentages here indicate machine direction growth. Positive machine direction shrinkages indicate shrinkage in the machine direction.

In certain embodiments of the present disclosure, the shrink films of this disclosure have shrinkage in the main shrinkage direction of from 50% or greater, or 60% or greater, or 70% or greater, when immersed in water at 95°C for 10 seconds.

In certain embodiments of the present disclosure, the shrink films of this disclosure have shrinkage in the main shrinkage direction in the amount of 50 to 90% and shrinkage in the machine direction of 10% or less, or from -10% to 10%, when immersed in water at 95°C for 10 seconds.

In one embodiment, the polyesters useful in the present disclosure are made into films using any method known in the art to produce films from polyesters, for example, solution casting, extrusion, compression molding, or calendering. The as-extruded (or as-formed) film is then oriented in one or more directions (e.g., monoaxially and/or biaxially oriented film). This orientation of the films can be performed by any method known in the art using standard orientation conditions. For example, the monoaxially oriented films of the present disclosure can be made from films having a thickness of about 100 to 400 microns, such as, extruded, cast or calendered films, which can be stretched at a ratio of 6.5:1 to 3:1 at a temperature of from the $T_g$ of the film to the $T_g + 55°C$, and which can be stretched to a thickness of 20 to 80 microns. In one embodiment, the orientation of the initial as extruded film can be performed on a tenter frame according to these orientation conditions.

In certain embodiments of the present disclosure, the shrink films of this disclosure can have a break strain percentage greater than 200% at a stretching speed of 500 mm/minute in the direction orthogonal to the main shrinkage direction according to ASTM Method D882.

In certain embodiments of the present disclosure, the shrink films of this disclosure can have a break strain percentage of greater than 300% at a stretching speed of 500 mm/minute in the direction orthogonal to the main shrinkage direction according to ASTM Method D882.

In certain embodiments of the present disclosure, the shrink films of this disclosure can have a tensile stress at break (break stress) of from 20 to 400 MPa; or 40 to 260 MPa; or 42 to 260 MPa as measured according to ASTM Method D882.

In certain embodiments of the present disclosure, the shrink films of this disclosure can have a shrink force of from 4 to 18 MPa, or from 4 to 15 MPa, as measured by ISO Method 14616 depending on the stretching conditions and the end-use application desired. For example, certain labels made for plastic bottles can have an MPa of from 4 to 8 and certain labels made for glass bottles can have a shrink force of from 10 to 14 Mpa as measured by ISO Method 14616 using a LabThink FST-02 Thermal Shrinkage Tester and reported in units of MPa.

In one embodiment of the present disclosure, the polyester compositions can be formed by reacting the monomers by known methods for making polyesters in what is typically referred to as reactor grade compositions.

Molded articles can also be manufactured from any of the polyester compositions disclosed herein which may or may not consist of or contain shrink films and are included within the scope of the present disclosure.

In one embodiment, when having a pre-oriented thickness of about 100 to 400 microns followed by orientation on a tenter frame at from a ratio of 6.5:1 to 3:1 at a temperature of from $T_g$ to $T_g + 55°C$ to a thickness of from about 20 to about 80 microns, the shrink films of the present disclosure can have one or more of the following properties: (1) shrinkage in the main shrinkage direction or transverse direction in the amount of greater than 60% (or greater than 70%), and 10% or less (or from -5% to 4%) shrinkage in the machine direction when immersed in water at 95°C for 10 seconds; (2) an onset of shrinkage temperature of from about 55°C to about 70°C; (3) a break strain percentage of greater than 200% at stretching speeds of 500 mm/minute, or 200 to 600%, or 200 to 500%, or 226 to 449%, or 250 to 455% in the transverse direction or in the machine direction or in both directions according to ASTM Method D882; (4) no more than 40% shrinkage per each 5°C temperature increase increment; and/or (5) strain induced crystalline melting point greater than or equal to 200°C. Any combination of these properties or all of these properties can be present in the shrink films of this disclosure. The shrink films of the present disclosure can have a combination of two or more of the above described shrink film properties. The shrink films of the present disclosure can have a combination of three or more of the above described shrink film properties. The shrink films of the present disclosure can have a combination of four or more of the above described shrink film properties. In certain embodiments, properties (1) - (2) are present. In certain embodiments, properties (1) - (5) are present. In certain embodiments, properties (1) - (3) are present, *etc.*

The shrinkage percentages herein are based on initial as-formed films having a thickness of about 20 to 80 microns that have been oriented at a ratio of from 6.5:1 to 3:1 at a temperature of $T_g$ to $T_g$ + 55°C on a tenter frame, for example, at a ratio of 5:1 at a temperature from 70°C to 85°C. In one embodiment, the shrinkage properties of the oriented films used to make the shrink films of this disclosure were not adjusted by annealing the films at a temperature higher than the temperature in which it was oriented.

The shape of the films useful in making the oriented films or shrink films of the present disclosure is not restricted in any way. For example, it may be a flat film or a film that has been formed into a tube. Films formed into a tube may use a seaming solvent or a seaming adhesive to bond or hold the edges of the film together during shrinking. In order to produce the shrink films useful in the present disclosure, the polyester is first formed into a flat film and then is "uniaxially stretched", meaning the polyester film is oriented in one direction. The films could also be "biaxially oriented," meaning the polyester films are oriented in two different directions; for example, the films are stretched in both the machine direction and a direction different from the machine direction. Typically, but not always, the two directions are substantially perpendicular. For example, in one embodiment, the two directions are in the longitudinal or machine direction ("MD") of the film (the direction in which the film is produced on a film-making machine) and the transverse direction ("TD") of the film (the direction perpendicular to the MD of the film). Biaxially oriented films may be sequentially oriented, simultaneously oriented, or oriented by some combination of simultaneous and sequential stretching.

The films may be oriented by any usual method, such as the roll stretching method, the long-gap stretching method, the tenter-stretching method, and the tubular stretching method. With use of any of these methods, it is possible to conduct biaxial stretching in succession, simultaneous biaxial stretching, uni-axial stretching, or a combination of these. With the biaxial stretching mentioned above, stretching in the machine direction and transverse direction may be done at the same time. Also, the stretching may be done first in one direction and then in the other direction to result in effective biaxial stretching. In one embodiment, stretching of the films is done by preliminarily heating the films 5°C to 80°C above their glass transition temperature ($T_g$). In one embodiment, the films can be preliminarily heated from 5°C to 30°C above their $T_g$. In one embodiment, the stretch rate is from 0.5 to 20 inches (1.27 to 50.8 cm) per second. Next, the films can be oriented, for example, in either the machine direction, the transverse direction, or both directions from 2 to 6 times the original measurements. The films can be oriented as a single film layer or can be coextruded with another polyester such as PET (polyethylene terephthalate) as a multilayer film and then oriented.

In one embodiment, the present disclosure includes an article of manufacture or a shaped article comprising the shrink films of any of the shrink film embodiments of this disclosure. In another embodiment, the present disclosure includes an article of manufacture or a shaped article comprising the oriented films of any of the oriented film embodiments of this disclosure.

In certain embodiments, the present disclosure includes but is not limited to shrink films applied to containers, plastic bottles, glass bottles, packaging, batteries, hot fill containers, and/or industrial articles or other applications. In one embodiment, the present disclosure includes but is not limited to oriented films applied to containers, packaging, plastic bottles, glass bottles, photo substrates such as paper, batteries, hot fill containers, and/or industrial articles or other applications.

In certain embodiments of the present disclosure, the shrink films of this disclosure can be formed into a label or sleeve. The label or sleeve can then be applied to an article of manufacture, such as, the wall of a container, battery, or onto a sheet or film.

The oriented films or shrink films of the present disclosure can be applied to shaped articles, such as, tubes or bottles and are commonly used in various packaging applications. For example, films and sheets produced from polymers such as polyolefins, polystyrene, poly(vinyl chloride), polyesters, polylactic acid (PLA) and the like are used frequently for the manufacture of shrink labels for plastic beverage or food containers. For example, the shrink films of the present disclosure can be used in many packaging applications where the shrink film applied to the shaped article exhibits properties, such as, good printability, good shrink force, good texture, high shrinkage, controlled shrink rate, good stiffness, and recyclability.

The improved shrink properties as well as recyclability should offer new commercial options, including but not limited to, shrink films applied to containers, plastic bottles, glass bottles, packaging, batteries, hot fill containers, and/or industrial articles or other applications.

In one aspect of the present disclosure, the disclosed polyester compositions are useful as thermoformed and/or thermoformable sheet(s). The present disclosure is also directed to articles of manufacture which incorporate the thermoformed sheet(s) of this disclosure. In one embodiment, the polyester compositions of the present disclosure are useful as sheet(s) which is easily formed into shaped or molded articles or parts. In one embodiment, the film(s) and/or sheet(s) of the present disclosure may be processed into molded articles or parts by thermoforming. The polyester compositions of the present disclosure may be used in a variety of molding and extrusion applications.

In addition, in one embodiment, the polyester compositions useful in the thermoformed sheet(s) of this disclosure may also contain from 0.1 to 25% by weight of the overall composition common additives such as colorants, anti-block agents, slip agents, mold release agents, flame retardants, plasticizers, nucleating agents, stabilizers, including but not limited to, UV stabilizers, thermal stabilizers, fillers, and impact modifiers.

In one embodiment, reinforcing materials may be included in the thermoformed sheet(s) comprising the polyester compositions of this disclosure. For examples, suitable the reinforcing materials may include carbon filaments, silicates, mica, clay, talc, titanium dioxide, Wollastonite, glass flakes, glass beads and fibers, and polymeric fibers and combinations thereof.

In one embodiment, the thermoformed sheet(s) of the present disclosure is multilayered sheet(s). In one embodiment at least one layer of the multilayer sheet is a foam or foamed polymer or polyester layer.

One aspect of the present disclosure is a method of making molded or shaped parts and articles using thermoforming. Any thermoforming techniques or processes known to those skilled in the art may be used to produce the molded or shaped articles and parts of this disclosure.

In one embodiment, the thermoforming processes can be done in several ways, for example as taught in "Technology of Thermoforming"; Throne, James; Hanser Publishers; 1996; pp. 16-29.

In some embodiments, it is a positive thermoforming process where gas or air pressure is applied to the softened sheet, the sheet is then stretched and drawn out like a bubble and a male mold is brought into the bubble from the inside. Then vacuum is applied to further draw and conform the part to the male mold surface. In this thermoforming process biaxial stretching/orientation is done primarily in one step when there is a gas or air pressure applied to the softened sheet. The molding step is then completed with cooling below the $T_g$ of the sheet and with the vacuum and male mold to freeze the orientation into the sheet for a good balance of physical and appearance properties. In other embodiments, it is a negative thermoforming process where a vacuum or a physical plug is applied to the heat softened sheet and stretches and draws the sheet to nearly the final part size, and then, positive air pressure from the inside or further external vacuum from the outside draws and conforms the sheet against an outer, female mold, the orientation is frozen with cooling below the $T_g$ of the sheet and the sheet is formed into the article.

In some embodiments, the produced bubble is sometimes further formed by making use of a plug assist, and this is followed by draping and shaping the sheet over the rising positive mold and then the corners and shelves guides, etc. are pulled into the mold by applying a vacuum. In some embodiments, after removal from the mold, the molded parts or articles can be trimmed, holes punched, and corners cut out as needed.

In other embodiments, thermoforming is a process where the sheet of the polyester compositions of the present disclosure is heated to a temperature sufficient to allow the deformation thereof, and the heated sheet is then made to conform to the contours of a mold by such means as vacuum assist, air pressure assist and matched mold assist. In another embodiment, the heated sheet is placed in a mold and forced to conform to the contours of the mold by, for example, application of air pressure, application of a vacuum, plug assist or application of a matching mold. In some embodiments, thermoforming produces thin wall articles. In some embodiments, thermoforming produces thick wall articles.

In one embodiment, the thermoforming process molds the sheet into the desired shapes through the pressing of positive molds into the heated sheet. In certain embodiments, thermoforming involves having a positive mold of an article supported between a vacuum-equipped surface or table. In these embodiments, heat from an external heat source such as a hot air blower, heat lamp or other radiant heat source is directed at the sheet. In these embodiments, the sheet is heated to the point of softening. In these embodiments, a vacuum is then applied to and below the table and around the mold, and the heat softened sheet is drawn toward the table, thus placing the softened sheet in contact with the mold surface. In these embodiments, the vacuum draws the softened sheet into tight contact with, and conformance to, the contours of the mold surface. As such, the sheet then assumes the shape of the mold. In these embodiments, after the sheet cools, it hardens, and the resulting article or part may be removed from the mold.

In one embodiment, the thermoforming process comprises: forming a sheet from the polyester compositions of the present disclosure; heating the sheet until it softens and positioning it over a mold; drawing the preheated sheet onto the heated mold surface; cooling the sheet; and then removing the molded article or part from the mold cavity, or optionally, heatsetting the formed sheet by maintaining the sheet in contact against the heated mold for a sufficient time period to partially crystallize the sheet.

In one embodiment, the thermoforming process comprises: forming a sheet from the polyester compositions of the present disclosure; heating the sheet to a temperature at or above the $T_g$ of the polyester; applying gas, vacuum and/or physical pressure to the heat softened sheet and stretching the sheet to nearly the final part size; conforming the sheet by vacuum or pressure to a mold shape; cooling the sheet to a temperature below the $T_g$ of the polyester; and then removing the thermoformed article or part from the mold.

The sheet used in the thermoforming process can be made by any conventional method known to those skilled in the art. In one embodiment, the sheet is formed by extrusion. In one embodiment, the sheet is formed by calendering. In one embodiment, during the thermoforming process the sheet is heated to a temperature at or above the $T_g$ of the polyester. In one embodiment, this temperature is about 10°C to about 60°C above the $T_g$ of the polyester. In one embodiment, the heating of the sheet prior to positioning over the thermoforming mold is necessary in order to achieve a shorter molding time. In one embodiment, the sheet must be heated above its $T_g$ and below the point at which it sags excessively during positioning over the mold cavity. In one embodiment, before the molded sheet is removed from the mold it is allowed to cool to a temperature below the $T_g$ of the polyester. In one embodiment, the thermoforming methods may include vacuum assist, air assist, mechanical plug assist or matched mold. In some embodiments, the mold is heated to a temperature at or above the $T_g$ of the sheet. Selection of optimum mold temperature is dependent upon type of thermoforming equipment, configuration and wall thickness of article being molded and other factors.

In some embodiments, the heated sheet is stretched by creating and pulling a vacuum.

In one embodiment, heatsetting is the process of thermally inducing partial crystallization of a polyester sheet without appreciable orientation being present. In one embodiment, heatsetting is achieved by maintaining contact of the sheet with the heated mold surface for a sufficient time to achieve a level of crystallinity which gives adequate physical properties to the finished part. In certain embodiments, the levels of crystallinity (relative crystallinity) should be greater than 8 cal./g.

In one embodiment, the heatset part can be removed from the mold cavity by known means for removal. For example, in one embodiment, blowback is used and it involves breaking the vacuum established between the mold and the formed sheet by the introduction of compressed air. In some embodiments, the molded article or part is subsequently trimmed, and the scrap is ground and recycled.

In some embodiments, the addition of nucleating agents provide faster crystallization during thermoforming and thus provide for faster molding. In one embodiment, nucleating agents such as fine particle size inorganic or organic materials may be used. For example, in one embodiment, suitable nucleating agents include talc, titanium dioxide, calcium carbonate, and immiscible or cross-linked polymers. In one embodiment, the nucleating agents are used in amounts varying from about 0.01% to about 20%, based on the weight of the article. In one embodiment, other conventional additives such as pigments, dyes, plasticizers, anti-cracking agent and stabilizers may be used as needed for thermoforming. In some embodiments, the anti-cracking agent improves impact strength, and the nucleating agent provides faster crystallization. In some embodiments, crystallization is necessary to achieve high temperature stability.

In one embodiment, a foamed polyester sheet is made by foaming a polyester composition of the present disclosure with chemical and/or physical blow agents, extruding the foamed polyester into sheet, and thermoforming the foamed polyester sheet. Additives for providing enhanced properties to the foamed polyester sheet may be added to the polyester prior to foaming. Some examples of additives include slip agents, antiblocking agents, plasticizers, optical brighteners and ultra violet inhibitors. In one embodiment, the foamed polyester sheet can be extrusion or lamination coated on one side or on both sides using conventional techniques in order to enhance its properties. In one embodiment, the coating materials may be the printed surface, rather than the foamed sheet itself, that provides for product labelling.

In certain embodiments, the compositions of this disclosure are useful as molded or shaped plastic parts or as solid plastic objects. In some embodiments, the compositions of this disclosure are useful as thermoformed parts or articles. In some embodiments, the compositions of this disclosure are suitable for use in any applications where clear, hard plastics are required. In some embodiments, for example, the compositions of this disclosure are suitable for use as parts such as disposable knives, forks, spoons, plates, cups, straws as well as eyeglass frames, toothbrush handles, toys, automotive trim, tool handles, camera parts, parts of electronic devices, razor parts, ink pen barrels, disposable syringes, bottles, and the like. In one embodiment, the compositions of the present disclosure are useful as plastics, films, fibers, and sheets.

In one embodiment, the compositions are useful as plastics to make bottles, bottle caps, eyeglass frames, cutlery, disposable cutlery, cutlery handles, shelving, shelving dividers, electronics housing, electronic equipment cases, computer monitors, printers, keyboards, pipes, automotive parts, automotive interior parts, automotive trim, signs, thermoformed letters, siding, toys, thermally conductive plastics, ophthalmic lenses, tools, tool handles, and utensils. In another embodiment, the compositions of the present disclosure are suitable for use as films, sheeting, fibers, molded articles, shaped articles, molded parts, shaped parts, medical devices, dental trays, dental appliances, containers, food containers, shipping containers, packaging, bottles, bottle caps, eyeglass frames, cutlery, disposable cutlery, cutlery handles, shelving, shelving dividers, furniture components, electronics housing, electronic equipment cases, computer monitors, printers, keyboards, pipes, toothbrush handles, automotive parts, automotive interior parts, automotive trim, signs, outdoor signs, skylights, multiwall film, multilayer film, insulated parts, insulated articles, insulated containers, thermoformed letters, siding, toys, toy parts, trays, food trays, dental trays, thermally conductive plastics, ophthalmic lenses and frames, tools, tool handles, and utensils, healthcare supplies, commercial foodservice products, boxes, film for graphic arts applications, plastic film for plastic glass laminates, point of purchase displays, skylights, smoke vents, laminated cards, fenestration, glazing, partitions, ceiling tiles, lighting, machine guards, graphic arts, lenticular, extrusion laminated sheets or films, decorative laminates, office furniture, face shields, medical packaging, sign holders on point of display shelving, and shelf price holds.

The present thermoformed or thermoformable sheet is useful in forming films, molded articles, molded parts, shaped articles, shaped parts and sheeting. The methods of making the thermoformed or thermoformable compositions into films, molded articles, molded parts, shaped articles, shaped parts and sheeting can be according to any methods known in the art. Examples of molded articles include without limitation: medical devices, medical packaging, healthcare supplies, commercial foodservice products such as trays, containers, food pans, tumblers, storage boxes, bottles, food processors, blender and mixer bowls, utensils, water bottles, crisper trays, washing machine parts, refrigerator parts, vacuum cleaner parts, ophthalmic lenses and frames, and toys.

This disclosure further relates to articles of manufacture comprising the sheet(s) containing polyester compositions described herein. In embodiments, the sheet(s) of the present disclosure can be of any thickness as required for the intended application.

This disclosure further relates to the sheet(s) described herein. The methods of forming the polyester compositions into sheet(s) includes any methods known in the art. Examples of sheet(s) of the present disclosure includes but is not limited to extruded sheet(s), calendered sheet(s), compression molded sheet(s), solution casted sheet(s). Methods of making sheet of the present disclosure include but are not limited to extrusion, calendering, compression molding, wet block processing, dry block processing and solution casting.

This disclosure further relates to the molded or shaped articles described herein. The methods of forming the polyester compositions into molded or shaped articles includes any known methods in the art. Examples of molded or shaped articles of this disclosure including but not limited to thermoformed or thermoformable articles, injection molded articles, extrusion molded articles, injection blow molded articles, injection stretch blow molded articles and extrusion blow molded articles. Methods of making molded articles include but are not limited to thermoforming, injection molding, extrusion, injection blow molding, injection stretch blow molding, and extrusion blow molding. The processes of this disclosure can include any thermoforming processes known in the art. The processes of this disclosure can include any blow molding processes known in the art including, but not limited to, extrusion blow molding, extrusion stretch blow molding, injection blow molding, and injection stretch blow molding.

This disclosure includes any injection blow molding manufacturing process known in the art. Although not limited thereto, a typical description of injection blow molding (IBM) manufacturing process involves: 1) melting the composition in a reciprocating screw extruder; 2) injecting the molten composition into an injection mold to form a partially cooled tube closed at one end (i.e. a preform); 3) moving the preform into a blow mold having the desired finished shape around the preform and closing the blow mold around the preform; 4) blowing air into the preform, causing the preform to stretch and expand to fill the mold; 5) cooling the molded article; 6) ejecting the article from the mold.

This disclosure includes any injection stretch blow molding manufacturing process known in the art. Although not limited thereto, a typical description of injection stretch blow molding (ISBM) manufacturing process involves: 1) melting the composition in a reciprocating screw extruder; 2) injecting the molten composition into an injection mold to form a partially cooled tube closed at one end (i.e. a preform); 3) moving the preform into a blow mold having the desired finished shape around the preform and closing the blow mold around the preform; 4) stretching the preform using an interior stretch rod, and blowing air into the preform causing the preform to stretch and expand to fill the mold; 5) cooling the molded article; 6) ejecting the article from the mold.

This disclosure includes any extrusion blow molding manufacturing process known in the art. Although not limited thereto, a typical description of extrusion blow molding manufacturing process involves: 1) melting the composition in an extruder; 2) extruding the molten composition through a die to form a tube of molten polymer (i.e. a parison); 3) clamping a mold having the desired finished shape around the parison; 4) blowing air into the parison, causing the extrudate to stretch and expand to fill the mold; 5) cooling the molded article; 6) ejecting the article of the mold; and 7) removing excess plastic (commonly referred to as flash) from the article.

The following examples further illustrate how the polyesters of the present disclosure can be made and evaluated and are intended to be purely exemplary and are not intended to limit the scope thereof. Unless indicated otherwise, parts are parts by weight, temperature is in degrees C (Celsius) or is at room temperature, and pressure is at or near atmospheric.

## Examples

Copolyester resin samples were made using procedures described herein. In all cases, the resin samples were dried prior to extrusion.

Laboratory film samples were made by extruding the resin samples into 10mil (250 micron) films using a 2.5" Davis and Standard, single screw extuder. These 10mil films were cut and stretched on a Bruckner Karo 4 tenter frame to approximately a 5:1 stretch ratio and to a final thickness of 50 microns at a temperature 5-15 degrees above the glass transition temperature ($T_g$) of the extruded film.

Tenter frame film samples were made by extruding and stretching resins samples on a commercial tenter frame (located at Marshall and Williams, a division of Parkinson Technologies) where the film is extruded using a 3 layer, A-B-C die where the B-layer is extruded from a 2.5 inch single screw extruder and the A and C layers are extruded from separate, 1.25 inch single screw satellite extruders. The film is cast at a thickness of roughly 10mil (250 microns) and then stretched with a 5:1 stretch ratio and to a thickness of 50 microns. In general, the cast thickness is 250microns and the final film thickness is 50 microns. The line speed was 45fpm.

The glycol content of the extruded film compositions was determined via NMR. All NMR spectra were recorded on a JEOL Eclipse Plus 600 MHz nuclear magnetic resonance spectrometer using either chloroform-trifluoroacetic acid (70-30 volume/volume) for polymers with deuterated chloroform added for lock. The acid component of the blended polymers used in the examples herein was 100 mole% terephthalic acid. The total mole percentages of the glycol component equaled 100 mole% and the total mole percentages of the acid component equaled 100 mole%.

The inherent viscosity of the polyesters herein was determined in 60/40 (wt/wt) phenol/tetrachloroethane at a concentration of 0.5 g/dL at 25°C., and is reported in dL/g.

Shrinkage is measured herein by placing a 50mm by 50mm square film sample in water at a temperature in 5 degree increments between and including 65°C to 95°C. The film is immersed in the water for 10 seconds without restricting shrinkage in any direction and the shrinkage (or growth) of the film sample is measured. The percent shrinkage is calculated by the following equation:

$$\% \text{ shrinkage} = [(50mm\text{-length after shrinkage})/50mm]\times100\%.$$

Shrinkage was measured in the direction orthogonal to the main shrinkage direction (machine direction, MD) and was also measured in the main shrinkage direction (transverse direction, TD).

Shrink force is measured for the examples herein with a LabThink FST-02 Thermal Shrinkage Tester in MPa at the same temperature used to stretch the film.

Tensile film properties were measured for the examples herein using ASTM Method D882. Multiple film stretching speeds (300 mm/min and 500 mm/min) were used to evaluate the toughness of the films.

The glass transition temperatures and the strain induced crystalline melting points ($T_g$ and $T_m$ respectively) of the polyesters were determined using a TA DSC 2920 from Thermal Analyst Instrument at a scan rate of 20°C/min. Tm was measured on the 1st heat on stretched samples and Tg was measured during the 2nd heating step. Additionally, samples could be crystallized in a forced air oven at 165°C for 30 minutes and then analyzed with DSC. For all samples, a crystalline melting point was typically NOT present during the second heat of the DSC scan with a heating rate of 20° C/min.

The compatibility of a material in the recycling process has been defined in procedures published by the Association for Plastic Recyclers (APR). In the case of PETG resins, clumping of PET is the major issue that has been addressed with this invention. A laboratory process was developed to mimic this industry standard. Parameters of the laboratory clump test are as follows:

- 582g PET flake is combined 18g shrink flaked film (3% film with PET flake) in its shrunk state (film was previously shrunk by immersing in water at 85°C for 10 seconds)
- PET flake + film was placed in an aluminum pan to achieve a depth of 1.5 inches.
- The pan with the flake was placed in a forced air oven at 208°C for 1.5 hour.
- The flake was then poured carefully through a 0.5" sieve and the amount of flake that remained in the pan or that could not pass through the sieve was weighed and the degree of clumping (%) was calculated as a percent of the starting weight.

The Association for Plastic Recyclers (APR) has established a test for measuring whether a material is compatible with the current recycling process (Critical Guidance Protocol for Clear PET Articles with Labels and Closures PET-CG-02, revision or creation date April 11, 2019). This method references a method for measuring PET clumping (PET Flake Clumping Evaluation; PET-S-08; revision date November 16, 2018). The details of this test are as follows:

- Labels (minimum 3% by weight, preshrunk for 10seconds at 85°C) and bottles are ground to a ¼" to ½" flake size to create labelled bottle flake.

- The labelled bottle flake is blended 50:50 with unlabeled control bottle flake.

- The sample was then elutriated on a setting that allows no more than 1.2% of the PET to be carried over with label.

- The flake is washed with 0.3% Triton X-100 and 1.0% caustic for 15 minutes at 88°C.

- The flake is then washed with water after removing all floating material and then strained to remove excess water.

- The flake is elutriated again just as before.

- 2lbs of washed flake (containing the label) is placed in a Teflon-lined baking dish for each washed sampled and the flake is added to a layer thickness of 1.5 inches.

- The pan containing the flake is placed in a circulating oven at 208°C for 1-1/2 hours.

- The flake is cooled and then passed through a sieve with 0.0625 inch openings. As the material is passed through the sieve, no material should clump and therefore become too large to pass through the sieve.

- This testing was followed by extrusion/pelletization and molding steps to ensure quality of the flake

Modulated Differential Scanning Calorimetry (MDSC) is a technique which measures the difference in heat flow between a sample and an inert reference as a function of time and temperature. In addition, the same heat flux cell design is used as is used in traditional DSC. However, in MDSC a different heating profile (temperature regime) is applied to the sample and reference. Specifically, a sinusoidal modulation (oscillation) is overlaid on the conventional linear heating or cooling ramp to yield a profile in which the average sample temperature continuously changes with time but not in a linear fashion. The net effect of imposing this more complex heating profile on the sample is the same as if two experiments were run simultaneously on the material - one experiment at the traditional linear (average) heating rate and one at a sinusoidal (instantaneous) heating rate. The actual rates for these two simultaneous experiments are dependent on three operator-selectable variables:

- Underlying heating rate (3°C/minute)
- Period of modulation (60 seconds)
- Temperature amplitude of modulation ($\pm 1$°C)

Reversing heat flow was used to analyze the glass transition temperature and the area of the melt peak. The heat of fusion (Hf) upon heating was measured as the integrated reversing Heat Flow signal. The heat of crystallization (Hc) upon heating was integrated from the Total Heat Flow signal. The sample's relative crystallinity (C) was measured by subtracting the heat of fusion (Hf) from the heat of crystallization (Hc) upon heating.

Example 1 and Reference examples 2-4

Copolyester resins with different glycol compositions were made and converted into shrinkable films using the laboratory film process and the corresponding shrinkable film properties were measured. Film samples were also tested for clumping with PET flake using the laboratory clump test. The key performance properties are shown below. Films made with resin example 1 and reference example 2 created less than 1% clumping of PET flake. Films made with resin example 1 and reference examples 3 and 4 had excellent shrinkable film properties. Only films made with resin example 1 had excellent shrinkable film properties and clumping less than 1%. In Table 1 examples 2-4 are not according to the invention.

Table 1: Example 1 and Reference examples 2-4

|  | Example 1 | Example 2 | Example 3 | Example 4 |
|---|---|---|---|---|
| PTA content (mole%) | 100 | 100 | 100 | 100 |
| EG content (mole %) | 80 | 93.5 | 71 | 64 |
| CHDM (mole %) | 3 | 3.5 | 0 | 23 |
| DEG content (mole %) | 5 | 2 | 2 | 12 |
| NPG Content (mole%) | 11 | 0 | 27 | 0 |
| Total Amorphous Monomer Content | 19 | 5.5 | 29 | 35 |
| Film thickness (microns) | 50 | 50 | 50 | 50 |

(continued)

| | Example 1 | Example 2 | Example 3 | Example 4 |
|---|---|---|---|---|
| Ultimate shrinkage (% at 95°C) | 73 | 24 | 79 | 80 |
| MD Shrinkage @ 70°C (%) | 6 | 1 | -1 | -3 |
| Shrink Force (MPa) | 10 | 7.1 | 11 | 8.5 |
| $T_g$ (° C) | 74 | 78 | 77 | 69 |
| Strain induced crystalline melting point (° C) | 203 | 241 | 167 | 161 |
| Elongation @ break (%, at 300mm/min) | 562 | 517 | 383 | 459 |
| Elongation @ break (%, at 500mm/min) | 567 | 579 | 437 | 35 |
| PET clumping (%) | 0.8 | 0 | 10 | 25 |

Examples 5-6, and Reference example 7:

Resin Examples 5 and 6, and Reference example 7 were made and converted into shrinkable films on a commercial tenter frame and tested at using the APR testing procedure for compatibility with PET recycling.

Table 2: Examples 5 and 6, and Reference example 7

| | Example 5 | Example 6 | Example 7 |
|---|---|---|---|
| PTA content (mole%) | 100 | 100 | 100 |
| EG content (mole %) | 80 | 79 | 76 |
| CHDM (mole %) | 3 | 3 | 17 |
| DEG content (mole %) | 5 | 5 | 6 |
| NPG content (mole%) | 11 | 13 | 0 |
| Total Amorphous Monomer Content | 19 | 21 | 23 |
| Film thickness (microns) | 50 | 50 | 50 |
| Ultimate shrinkage (% at 95°C) | 73 | 70 | 63 |
| MD Shrinkage @ 70°C (%) | 6 | 4 | 2 |
| Shrink Force (MPa) | 10 | 10 | 8 |
| $T_g$ (° C) | 74 | 74 | 74 |
| Strain induced crystalline melting point (°C) | 203 | 196 | 194 |
| Elongation @ break (%, at 300mm/min) | 562 | 470 | 451 |
| Elongation @ break (%, at 500mm/min) | 567 | 429 | 580 |
| PET clumping (%) | 0.8 | 2.2 | 1.3% |
| Heat of fusion (Hf, cal/g) | 10.1 | 8.8 | 8.0 |
| Heat of Crystallization (Hc, cal/g) | 0.4 | 0.4 | 0.3 |
| Relative Crystallinity (Hf-Hc, cal/g) | 9.7 | 8.4 | 7.7 |

Example 7: not according to he invention

Example 8 and Reference examples 9-11:

Resins based on example 8 and reference examples 9-11 were converted into shrinkable film samples and tested for shrinkable film properties and tested for clumping with PET flake using the laboratory clump test.

Table 3: Example 8 and Reference examples 9-11

|  | Example 8 | Example 9 | Example 10 | Example 11 |
|---|---|---|---|---|
| PTA content (mole%) | 100 | 100 | 100 | 100 |
| EG content (mole %) | 80 | 79 | 79 | 88 |
| CHDM (mole %) | 5 | 15 | 0 | 5 |
| DEG content (mole %) | 5 | 5 | 5 | 7 |
| NPG Content (mole%) | 10 | 0 | 16 | 0 |
| Total Amorphous Monomer Content | 20 | 20 | 21 | 12 |
| Film thickness (microns) | 50 | 50 | 50 | 50 |
| Ultimate shrinkage (% at 95°C) | 59 | 57 | 65 | 36 |
| MD Shrinkage @ 70°C (%) | 2 | 2 | 1 | 4 |
| Shrink Force (MPa) | 9 | 9 | 9 | 6 |
| $T_g$ (° C) | 75 | 76 | 74 | 74 |
| Strain induced crystalline melting point (° C) | 200 | 201 | 196 | 227 |
| Elongation @ break (%, at 300mm/min) | 588 | 643 | 552 | 566 |
| Elongation @ break (%, at 500mm/min) | 675 | 636 | 493 | 598 |
| PET clumping (%) | 0.5 | 0.7 | 3.8 | 0.5 |
| Heat of fusion (Hf, cal/g) | 8.2 | 10 | 9.5 | 13.9 |
| Heat of Crystallization (Hc, cal/g) | 0.3 | 0.2 | 0.4 | 0.5 |
| Relative Crystallinity (Hf-Hc, cal/g) | 7.8 | 9.9 | 9.2 | 13.4 |

Reference example 12 and examples 13-16 Multilayer films were made using the commercial tenter frame process and tested for clumping with PET flake using the laboratory clump test. These films were made with example 4 as the core layer and example 1 as the cap layer.

Table 4: Multilayer Films, Examples 12-16

|  | Example 12 | Example 13 | Example 14 | Example 15 | Example 16 |
|---|---|---|---|---|---|
| PTA content (mole%) | 100 | 100 | 100 | 100 | 100 |
| EG content (mole %) | 64 | 67 | 67 | 68 | 69 |
| CHDM (mole %) | 23 | 20 | 18 | 17 | 15 |
| DEG content (mole %) | 12 | 11 | 10 | 9 | 9 |
| NPG Content (mole%) | 0 | 3 | 4 | 5 | 7 |
| Total Amorphous Monomer Content | 35 | 31 | 28 | 31 | 31 |
| Cap layer (%) | 0 | 9 | 13 | 16 | 20 |
| Core layer (%) | 100 | 91 | 87 | 84 | 80 |
| Film thickness (microns) | 50 | 50 | 50 | 50 | 50 |
| Ultimate shrinkage (% at 95°C) | 80 | 77 | 77 | 77 | 77 |
| MD Shrinkage @ 70°C (%) | -4 | -3 | -3 | -4 | -4 |
| Shrink Force (MPa) | 6.0 | 7.7 | 7.0 | 7.8 | 7.2 |
| $T_g$ (deg C) | 68 | 70 | 69 | 70 | 70 |
| Strain induced crystalline melting point (°C) #1 | 159 | 167 | 157 | 158 | 158 |

(continued)

|  | Example 12 | Example 13 | Example 14 | Example 15 | Example 16 |
|---|---|---|---|---|---|
| Strain induced crystalline melting point (°C) #2 | N/A | 217 | 217 | 217 | 217 |
| Elongation @ break (%, at 300mm/min) | 503 | 436 | 440 | 438 | 417 |
| Elongation @ break (%, at 500mm/min) | 129 | 359 | 374 | 454 | 448 |
| PET clumping (%) | 25 | 18 | 19 | 31 | 26 |

Example 12: not according to the invention

Thermoformed Sheet Examples:

Example B and Reference examples A and C were extruded into sheet materials with a thickness of 30mil (750microns) using a 2.5" Davis and Standard extruder. The sheet samples were then thermoformed into a basic tray design (dimensions 169mm $\times$ 136 mm $\times$ 44 mm) using an aluminum female mold that was designed to allow vacuum assist through the form. The form was installed on a Hydrotrim laboratory thermoformer. The oven temperature and mold temperatures were kept constant at 260°C and 42°C respectively. The sheet samples were placed in the oven for different dwell times, removed from the oven, and immediately formed into trays and allowed to cool prior to removal from the mold. Sheet temperature was measured using an infrared temperature sensor that is part of the thermoformer and confirmed with a handheld Infrared Thermometer.

Dwell times were changed to establish a thermoforming window within which high quality parts could be made beginning with 15 seconds and then increasing by 2 seconds each time. The dwell time was varied so that the samples would be heated to different temperatures prior to forming. Testing was ceased after the dwell time reached 29 seconds because Reference example C was very hazy and would not be considered a viable tray. Haze was measured on each sample as an indication of part quality and crystallization.

The tray made from Reference example C began exhibiting slight hazing at 23 seconds of dwell time. This would indicate a smaller thermoforming window for the Reference example C compared to Reference example A and Example B because they did not show an increase in haze over this range of dwell times. The quality of the thermoformed part is indicated with a "+" to indicate acceptable quality or a "-" to indicate poor quality. These quality ratings are based on a combination of haze and part definition after thermoforming.

Samples of extruded sheet and thermoformed parts were evaluated for compatibility with PET recycling using the laboratory clumping procedure. In addition, a pre-crystallization step was used, as described in the APR screening test for PET Clumping. Results from this clump testing are shown.

Example B exhibits desirable and differentiating characteristics: a wider thermoforming window, making it easier to process; it is also able to crystallize in the recycle process, making it compatible with PET recycling processes.

Table 5: Thermoformable Sheet Compositions

| Example # | A | B | C |
|---|---|---|---|
| PTA content (mole%) | 100 | 100 | 100 |
| EG content (mole %) | 69 | 79 | 93 |
| NPG (mole %) | 0 | 13 | 0 |
| CHDM (mole %) | 30 | 3 | 4 |
| DEG content (mole %) | 1 | 5 | 3 |
| Total Amorphous Monomer Content (mole%) | 31 | 21 | 7 |

Example A, C: not according to the invention

Table 6: Quality of Thermoformed Sheet

| Sample | Soak Time, secs | Sheet Temp., °C | Part Quality | % Haze |
|---|---|---|---|---|
| Example A | 15 | 114 | - | 0.7 |
| Example A | 17 | 123 | - | 0.64 |
| Example A | 19 | 129 | + | 0.68 |
| Example A | 21 | 138 | + | 0.67 |
| Example A | 23 | 145 | + | 0.62 |
| Example A | 25 | 152 | + | 0.72 |
| Example A | 27 | 156 | + | 0.77 |
| Example A | 29 | 162 | + | 0.51 |
| Example B | 15 | 114 | - | 0.54 |
| Example B | 17 | 123 | - | 0.69 |
| Example B | 19 | 129 | + | 0.59 |
| Example B | 21 | 138 | + | 0.64 |
| Example B | 23 | 143 | + | 0.57 |
| Example B | 25 | 148 | + | 0.56 |
| Example B | 27 | 156 | + | 0.52 |
| Example B | 29 | 162 | + | 0.75 |
| Example C | 15 | 114 | - | 1.19 |
| Example C | 17 | 124 | - | 1.38 |
| Example C | 19 | 131 | + | 1.43 |
| Example C | 21 | 138 | + | 1.52 |
| Example C | 23 | 143 | - | 2.18 |
| Example C | 25 | 153 | - | 4.17 |
| Example C | 27 | 157 | - | 12.07 |
| Example C | 29 | 163 | - | 30.07 |

Table 7: Laboratory PET Clumping of Thermoformed Sheet (%)

| | Sheet as extruded | Thermoformed Part | pre-crystallized |
|---|---|---|---|
| Example A | 8.8% | 11.0% | N/A |
| Example B | 4.2% | 6.7% | 0.1% |
| Example C | 0.6% | 0.5% | 0.2% |

Injection Molded Samples:

Reference samples A and C and sample B and Example 1 and Reference example 3 were injection molded and tested for their mechanical properties using normal procedures well-known to those skilled in the art of injection molding. The test parts were tested according to the following test methods: ASTM D638, ASTM D3763, ASTM D256, ASTM D4812, and ASTM D64. The mechanical properties of injection molded parts made with these reactor-grade resins are shown in Table 8.

Table 8: Mechanical Properties of Injection-Molded Parts

| | Example A | Example B | Example C | Example 3 | Embrace 4 |
|---|---|---|---|---|---|
| $T_g$ (°C) | 73 | 75 | 79 | 76 | 68 |

(continued)

| | Example A | Example B | Example C | Example 3 | Embrace 4 |
|---|---|---|---|---|---|
| **Yield Strength, Mpa** | 50 | 57 | 57 | 57 | 54 |
| **Yield Strain, %** | 4 | 4 | 4 | 4 | 4 |
| **Break Strength, Mpa** | 24 | 21 | 23 | 20 | 16 |
| **Break Strain, %** | 100 | 84 | 90 | 51 | 18 |
| **Modulus, Mpa** | 2061 | 2377 | 2364 | 2397 | 2202 |
| **Notched 23°C** | 73 | 31 | 46 | 30 | 50 |
| **Notched -40°C** | 37 | 32 | 31 | 31 | 35 |
| **Un-notched 23°C** | 2514 | 2760 | 2656 | 2707 | 2572 |
| **Un-notched -40°C** | 2933 | 1374 | 1953 | 925 | 2423 |
| **Instrumented Impact 23°C, Energy @ Max. Load** | 37 | 32 | 34 | 32 | 32 |
| **Instrumented Impact -40°C, Energy @ Max. Load** | 48 | 2 | 3 | 2 | 43 |
| **HDT @ 1.82 MPa** | 61 | 58 | 30 | 60 | 55 |
| **HDT @ 0.455 MPa** | 68 | 63 | 66 | 65 | 58 |

The present disclosure has been described in detail with particular reference to preferred embodiments thereof, but it will be understood that variations and modifications can be effected within the scope of this disclosure.

## Claims

1. A crystallizable film comprising a polyester composition comprising:

   at least one polyester which comprises:

   (a) a dicarboxylic acid component comprising:

   (i) 70 to 100 mole% of terephthalic acid residues
   (ii) 0 to 30 mole% of aromatic and/or aliphatic dicarboxylic acid residues having up to 20 carbon atoms; and

   (b) a diol component comprising:

   75 mole% or greater of ethylene glycol residues and
   25 mole% or less of other glycols comprising:

   (i) 0.1 to less than 24 mole% of neopentyl glycol residues;
   (ii) from greater than 0 to less than 24 mole% of 1,4-cyclohexanedimethanol residues;
   (iii) 1 to less than 10 mole% of total diethylene glycol residues in the final polyester composition;

   wherein the total mole% of the dicarboxylic acid component is 100 mole%, and
   wherein the total mole% of the diol component is 100 mole%.

2. A crystallizable film comprising a polyester composition comprising:

   at least one polyester which comprises:

   (a) a dicarboxylic acid component comprising:

(i) 70 to 100 mole% of terephthalic acid residues
(ii) 0 to 30 mole% of aromatic and/or aliphatic dicarboxylic acid residues having up to 20 carbon atoms; and

    (b) a diol component comprising:

        80 mole% or greater of ethylene glycol residues and
        20 mole% or less of other glycols comprising:

            (i) 5 to less than 17 mole% of neopentyl glycol residues;
            (ii) 2 to less than 10mole% of 1,4-cyclohexanedimethanol residues;
            (iii) 1 to less than 5 mole% of total diethylene glycol residues in the final polyester composition;

    wherein the total mole% of the dicarboxylic acid component is 100 mole%, and
    wherein the total mole% of the diol component is 100 mole%.

3. A crystallizable film comprising a polyester composition comprising:

    at least one polyester which comprises:

    (a) a dicarboxylic acid component comprising:

        (i) 70 to 100 mole% of terephthalic acid residues
        (ii) 0 to 30 mole% of aromatic and/or aliphatic dicarboxylic acid residues having up to 20 carbon atoms; and

    (b) a diol component comprising:

        (i) 1 to 30 mole% of neopentyl glycol residues
        (ii) 1 to less than 30 mole% of 1,4-cyclohexanedimethanol residues; and
        (iii) 1.5 to 6 mole% residues of diethylene glycol; and wherein the remainder of the glycol component comprises:
        (iv) residues of ethylene glycol, and
        (v) 0 to 20 mole% of the residues of at least one modifying glycol;

    wherein the total mole% of the dicarboxylic acid component is 100 mole%, and
    wherein the total mole% of the glycol component is 100 mole%.

4. The crystallizable film of any one of claims 1 to 3, wherein the inherent viscosity of the polyester is from 0.68 to 0.75 dL/g as determined in 60/40 (wt/wt) phenol/ tetrachloroethane at a concentration of 0.5 g/dL at 25°C, and wherein the polyester has a $T_g$ of from 72°C to 77°C as determined using a TA DSC 2920 from Thermal Analyst Instrument at a scan rate of 20°C/min.

5. The crystallizable film of any one of claims 1 or 3, wherein said 1,4-cyclohexanedimethanol residues are present in the amount of 2 to 5 mole%, diethylene glycol residues are present in the amount of 5 mole% or less, neopentyl glycol residues in the amount of 10 to 15 mole%, and ethylene glycol residues are present in the amount of greater than 75 mole%.

6. The crystallizable film of any of claims 1 to 5, wherein said film is stretched in at least one direction; or

    wherein said film is stretched and oriented in at least one direction; or
    wherein said film is annealed, preferably
    wherein said film is annealed at a temperature from about 75°C to about 110°C.

7. The crystallizable film of any of claims 1 to 6, wherein said film is stretched in at least one direction and the stretched film has a strain induced crystalline melting point of 200°C or greater, the strain induced crystalline melting point being determined using a TA DSC 2920 from Thermal Analyst Instrument at a scan rate of 20°C/min, the melting point was measured on the 1st heat on stretched samples.

8. The crystallizable film of any of claims 1 to 7, wherein said film has shrinkage in the main shrinkage direction of from 60% or greater when immersed in water at 85°C for 10 seconds, the shrinkage being determined by placing a 50mm by 50mm square film sample in water without restricting shrinkage in any direction, wherein the percent shrinkage is calculated by the following equation:

$$\% \text{ shrinkage} = [(50mm\text{-length after shrinkage})/50mm] \times 100\%.$$

9. The crystallizable film of any of claims 1 to 8, wherein said film has a shrink force of 5 MPa or greater, the shrink force being measured according to ISO 14616 using a LabThink FST-02 Thermal Shrinkage Tester in MPa at the temperature used to stretch the film.

10. The crystallizable film of any of claims 1 to 9, which is oriented in one or more directions.

11. The crystallizable film of any of claims 1 to 10, wherein the film has a shrinkage in the main shrinkage direction in the amount of 50 to 90% and shrinkage in the direction orthogonal to the main shrinkage direction of 10% or less when immersed in water at 95°C for 10 seconds, the shrinkage being determined by placing a 50mm by 50mm square film sample in water without restricting shrinkage in any direction, wherein the percent shrinkage is calculated by the following equation:

$$\% \text{ shrinkage} = [(50mm\text{-length after shrinkage})/50mm] \times 100\%.$$

12. A lidding film, extrusion blow molded container, extruded sheet, thermoformed sheet, flexible packaging film for stand-up pouches comprising the crystallizable film of any of claims 1 to 11; or
an article of manufacture, a shaped article, a container, a plastic bottle, a glass bottle, packaging, a battery, a hot fill container, or an industrial article having a label or sleeve applied thereto, said label or sleeve comprising the crystallizable film of any of claims 1 to 11.

13. A thermoformed sheet, having a thickness of from 0.25 mm to 6.4 mm comprising a polyester composition according to one of claims 1 to 3.

14. The thermoformed sheet of claim 13, wherein the polyester has a $T_g$ of from 65°C to 90°C as determined using a TA DSC 2920 from Thermal Analyst Instrument at a scan rate of 20°C/min.

15. The thermoformed sheet of claim 14, wherein the sum of the diol content in the final polyester is from 5 to 24 mole% wherein the total diol content is 100 mole%.

16. The thermoformed sheet of claim 15, wherein the sum of the diol content in the final polyester is from 15 to 20 mole% wherein the total diol content is 100 mole%.

17. The thermoformed sheet of claim 13 comprising the polyester composition according to one of claims 1, or 3 wherein said 1,4-cyclohexanedimethanol residues are present in the amount of 2 to 5 mole%, diethylene glycol residues are present in the amount of 5 mole% or less, neopentyl glycol residues in the amount of 10 to 15 mole%, and ethylene glycol residues are present in the amount of greater than 75 mole%.

18. The thermoformed sheet of any of claims 13 to 17, wherein said sheet or thermoformed article has a crystalline melting point of 190°C to 225°C, the strain induced crystalline melting point being determined using a TA DSC 2920 from Thermal Analyst Instrument at a scan rate of 20°C/min, the melting point was measured on the 1st heat.

19. A molded or shape article prepared from the thermoformed sheet of any of claims 13 to 18, preferably wherein said article is chosen from a medical device packaging, medical packaging, healthcare supplies packaging, commercial foodservice products, trays, containers, food pans, tumblers, storage boxes, bottles, food processors, blender and mixer bowls, utensils, water bottles, crisper trays, washing machine parts, refrigerator parts, vacuum cleaner parts, ophthalmic lenses and frames or toys.

20. A polyester recycle stream comprising recycled poly(ethylene terephthalate) flake,

having admixed therewith at least 0.1 weight percent of recycled crystallizable film of any one of claims 1 to 11 and/or recycled thermoformed sheet of claim 13, preferably
wherein said recycle stream passes the "Critical Guidance Protocol for Clear PET Articles with Labels and Closures", dated April 11, 2019, Document No. PET-CG-02.

**Patentansprüche**

1. Kristallisierbare Folie, umfassend eine Polyesterzusammensetzung, die Folgendes umfasst:

   mindestens einen Polyester, bestehend aus:

   (a) eine Dicarbonsäurekomponente, bestehend aus:

   (i) 70 bis 100 Mol-% Terephthalsäure-Resten,
   (ii) 0 bis 30 Mol-% aromatischen und/oder aliphatischen Dicarbonsäure-Resten mit bis zu 20 Kohlenstoffatomen und

   (b) eine Diolkomponente, die Folgendes umfasst:

   75 Mol-% oder mehr an Ethylenglykol-Resten und
   25 Mol-% oder weniger an anderen Glykolen, umfassend:

   (i) 0.1 bis weniger als 24 Mol-% an Neopentylglykol-Reste,
   (ii) von mehr als 0 bis weniger als 24 Mol-% 1,4-Cyclohexandimethanol-Reste,
   (iii) 1 bis weniger als 10 Mol-% der gesamten Diethylenglykol-Reste in der endgültigen Polyesterzusammensetzung,

   wobei der Gesamtmolprozentsatz der Dicarbonsäurekomponente 100 Mol-% beträgt, und
   wobei der Gesamtmolprozentsatz der Diolkomponente 100 Mol-% beträgt.

2. Kristallisierbare Folie, umfassend eine Polyesterzusammensetzung, die Folgendes umfasst:

   mindestens einen Polyester, bestehend aus:

   (a) eine Dicarbonsäurekomponente, bestehend aus:

   (i) 70 bis 100 Mol-% Terephthalsäure-Resten,
   (ii) 0 bis 30 Mol-% aromatischen und/oder aliphatischen Dicarbonsäure-Resten mit bis zu 20 Kohlenstoffatomen und

   (b) eine Diolkomponente, die Folgendes umfasst:

   80 Mol-% oder mehr an Ethylenglykol-Resten und
   20 Mol-% oder weniger an anderen Glykolen, umfassend:

   (i) 5 bis weniger als 17 Mol-% an Neopentylglykol-Reste,
   (ii) 2 bis weniger als 10 Mol-% an 1,4-Cyclohexandimethanol-Reste,
   (iii) 1 bis weniger als 5 Mol-% der gesamten Diethylenglykol-Reste in der endgültigen Polyesterzusammensetzung,

   wobei der Gesamtmolprozentsatz der Dicarbonsäurekomponente 100 Mol-% beträgt, und
   wobei der Gesamtmolprozentsatz der Diolkomponente 100 Mol-% beträgt.

3. Kristallisierbare Folie, umfassend eine Polyesterzusammensetzung, die Folgendes umfasst:

   mindestens einen Polyester, bestehend aus:

(a) eine Dicarbonsäurekomponente, bestehend aus:

(i) 70 bis 100 Mol-% Terephthalsäure-Reste,
(ii) 0 bis 30 Mol-% aromatische und/oder aliphatische DicarbonsäureReste mit bis zu 20 Kohlenstoffatomen und

(b) eine Diolkomponente, die Folgendes umfasst:

(i) 1 bis 30 Mol-% Neopentylglykol-Reste,
(ii) 1 bis weniger als 30 Mol-% 1,4-Reste und
(iii) 1,5 bis 6 Mol-% Reste von Diethylenglykol und

wobei der Restbestand der Glykolkomponente umfasst:

(iv) Reste von Ethylenglykol, und
(v) 0 bis 20 Mol-% Reste von mindestens einem modifizierenden Glykol, wobei der Gesamtmolprozentsatz der Dicarbonsäurekomponente 100 Mol-% beträgt, und wobei der Gesamtmolprozentsatz der Diolkomponente 100 Mol-% beträgt.

4.  Kristallisierbare Folie nach einem der Ansprüche 1 bis 3, wobei die inhärente Viskosität des Polyesters 0,68 bis 0,75 dL/g beträgt, bestimmt in 60/40 (Gew./Gew.) Phenol/Tetrachlorethan bei einer Konzentration von 0,5 g/dL bei 25°C, und wobei der Polyester einen Tg von 72°C bis 77°C aufweist, bestimmt unter Verwendung des TA DSC 2920 von Thermal Analyst Instrument bei einer Abtastrate von 20°C/min.

5.  Kristallisierbare Folie nach einem der Ansprüche 1 oder 3, wobei die 1,4-Cyclohexandimethanol-Reste in einer Menge von 2 bis 5 Mol-%, Diethylenglykol-Reste in einer Menge von 5 Mol-% oder weniger, Neopentylglykol-Reste in einer Menge von 10 bis 15 Mol-% und Ethylenglykol-Reste in einer Menge von mehr als 75 Mol-% vorhanden sind.

6.  Kristallisierbare Folie nach einem der Ansprüche 1 bis 5, wobei die Folie in mindestens einer Richtung gestreckt ist, oder

wobei die Folie in mindestens einer Richtung gestreckt und orientiert ist, oder
wobei die Folie getempert wird, vorzugsweise
wobei die Folie bei einer Temperatur von 75°C bis 110°C getempert wird.

7.  Kristallisierbare Folie nach einem der Ansprüche 1 bis 6, wobei die Folie in mindestens einer Richtung gestreckt ist und die gestreckte Folie einen dehnungsinduzierten kristallinen Schmelzpunkt von 200°C oder mehr aufweist, wobei der dehnungsinduzierte kristalline Schmelzpunkt unter Verwendung des TA DSC 2920 von Thermal Analyst Instrument bei einer Abtastrate von 20°C/min bestimmt wurde, wobei der Schmelzpunkt in der ersten Aufwärmphase an gestreckten Proben gemessen wurde.

8.  Kristallisierbare Folie nach einem der Ansprüche 1 bis 7, wobei die Folie eine Schrumpfung in der Hauptschrumpfungsrichtung von 60 % oder mehr aufweist, wenn sie 10 Sekunden lang bei 85 °C in Wasser getaucht wird, wobei die Schrumpfung bestimmt wird, indem eine 50 mm x 50 mm große quadratische Folienprobe in Wasser gelegt wird, ohne dass die Schrumpfung in irgendeiner Richtung eingeschränkt wird, wobei die prozentuale Schrumpfung durch die folgende Gleichung berechnet wird:

$$\% \text{ Schrumpfung} = [(50\text{mm-Länge nach Schrumpfung})/50\text{mm}] \times 100\%.$$

9.  Kristallisierbare Folie nach einem der Ansprüche 1 bis 8, wobei die Folie eine Schrumpfkraft von 5 MPa oder mehr aufweist, wobei die Schrumpfkraft gemäß ISO 14616 unter Verwendung eines LabThink FST-02 Wärmeschrumpftesters in MPa bei der zum Strecken der Folie verwendeten Temperatur gemessen wird.

10.  Kristallisierbare Folie nach einem der Ansprüche 1 bis 9, wobwi die Folie in eine oder mehrere Richtungen orientiert ist.

11.  Kristallisierbare Folie nach einem der Ansprüche 1 bis 10, wobei die Folie eine Schrumpfung in der Hauptschrumpfungsrichtung in Höhe von 50 bis 90 % und eine Schrumpfung in der Richtung orthogonal zur Hauptschrumpfungsrichtung von 10 % oder weniger aufweist, wenn sie 10 Sekunden lang bei 95 °C in Wasser getaucht wird, wobei die Schrumpfung bestimmt wird, indem eine quadratische Folienprobe von 50 mm x 50 mm in Wasser gelegt wird, ohne die Schrumpfung in irgendeiner Richtung einzuschränken, wobei die prozentuale Schrumpfung durch die folgende Gleichung berechnet wird:

$$\% \text{ Schrumpfung} = [(50\text{mm-Länge nach Schrumpfung})/50\text{mm}] \times 100\%.$$

12. Deckelfolie, extrusionsblasgeformter Behälter, extrudierte Folie, thermogeformte Folie, flexible Verpackungsfolie für Standbodenbeutel, die die kristallisierbare Folie nach einem der Ansprüche 1 bis 11 enthält, oder Fertigungsgegenstand, Formgegenstand, Behälter, Kunststoffflasche, Glasflasche, Verpackung, Batterie, Heißfüllbehälter oder Industrieartikel mit einem darauf angebrachten Etikett oder einer Hülle, wobei das Etikett oder die Hülle die kristallisierbare Folie nach einem der Ansprüche 1 bis 11 umfasst.

13. Tiefgezogene Folie mit einer Dicke von 0,25 mm bis 6,4 mm, umfassend eine Polyesterzusammensetzung nach einem der Ansprüche 1 bis 3.

14. Tiefgezogene Folie nach Anspruch 13, wobei der Polyester ein Tg von 65°C bis 90°C hat, bestimmt mit einem TA DSC 2920 von Thermal Analyst Instrument bei einer Abtastrate von 20°C/min.

15. Tiefgezogene Folie nach Anspruch 14, wobei die Summe des Diolgehalts im fertigen Polyester 14 bis 24 Mol-% beträgt, wobei der gesamte Diolgehalt 100 Mol-% beträgt.

16. Tiefgezogene Folie nach Anspruch 15, wobei die Summe des Diolgehalts im fertigen Polyester 15 bis 20 Mol-% beträgt, wobei der gesamte Diolgehalt 100 Mol-% beträgt.

17. Tiefgezogene Folie nach Anspruch 13, umfassend die Polyesterzusammensetzung nach einem der Ansprüche 1 oder 3, wobei die 1,4-Cyclohexandimethanol-Reste in einer Menge von 2 bis 5 Mol-%, Diethylenglykol-Reste in einer Menge von 5 Mol-% oder weniger, Neopentylglykol-Reste in einer Menge von 10 bis 15 Mol-% und Ethylenglykol-Reste in einer Menge von mehr als 75 Mol-% vorhanden sind.

18. Tiefgezogene Folie nach einem der Ansprüche 13 bis 17, wobei die Folie oder der tiefgezogene Gegenstand einen kristallinen Schmelzpunkt von 190°C bis 225°C aufweist, wobei der dehnungsinduzierte kristalline Schmelzpunkt unter Verwendung des TA DSC 2920 von Thermal Analyst Instrument bei einer Abtastrate von 20°C/min bestimmt wurde, wobei der Schmelzpunkt in der ersten Aufwärmphase gemessen wurde.

19. Formkörper, hergestellt aus einer thermogeformten Folie nach einem der Ansprüche 13 bis 18, vorzugsweise wobei der Gegenstand vorzugsweise aus einer Verpackung für medizinische Geräte, einer medizinischen Verpackung, einer Verpackung für Gesundheitsfürsorgeartikel, kommerziellen Lebensmittelbedarfsprodukten, Schalen, Behältern, Lebensmitteltöpfen, Bechern, Aufbewahrungsboxen, Flaschen, Lebensmittelverarbeitungsmaschinen, Mixer- und Rührschüsseln, Utensilien, Wasserflaschen, Chipsschalen, Waschmaschinenteilen, Kühlschrankteilen, Staubsaugerteilen, Brillengläsern und -rahmen oder Spielzeug ausgewählt ist.

20. Polyester-Recyclingstrom, umfassend rezyklierte Poly(ethylenterephthalat)-Flocken, denen mindestens 0,1 Gewichtsprozent rezyklierte kristallisierbare Folie nach einem der Ansprüche 1 bis 11 und/oder rezyklierte thermogeformte Folie nach Anspruch 13 beigemischt ist, vorzugsweise wobei der Recyclingstrom das "Critical Guidance Protocol for Clear PET Articles with Labels and Closures", vom 11. April 2019, Dokument Nr. PET-CG-02 erfüllt.

**Revendications**

1. Film cristallisable comprenant une composition de polyester comprenant :

au moins un polyester qui comprend :

(a) un composant acide dicarboxylique comprenant :

(i) 70 à 100 % en mole de résidus d'acide téréphtalique

(ii) 0 à 30 % en mole de résidus d'acide dicarboxylique aromatique et/ou aliphatique ayant jusqu'à 20 atomes de carbone ; et

(b) un composant diol comprenant :

75 % en mole ou plus de résidus d'éthylène glycol et

25 % en mole ou moins d'autres glycols comprenant :

(i) 0,1 à moins de 24 % en mole de résidus de néopentylglycol ;

(ii) plus de 0 à moins de 24 % en mole de résidus de 1,4-cyclohexanediméthanol ;

(iii) 1 à moins de 10 % en mole de résidus de diéthylène glycol totaux dans la composition de polyester finale ;

dans lequel le % en mole total du composant acide dicarboxylique est de 100 % en mole, et

dans lequel le % en mole total du composant diol est de 100 % en mole.

2. Film cristallisable comprenant une composition de polyester comprenant :

au moins un polyester qui comprend :

(a) un composant acide dicarboxylique comprenant :

(i) 70 à 100 % en mole de résidus d'acide téréphtalique

(ii) 0 à 30 % en mole de résidus d'acide dicarboxylique aromatique et/ou aliphatique ayant jusqu'à 20 atomes de carbone ; et

(b) un composant diol comprenant :

80 % en mole ou plus de résidus d'éthylène glycol et

20 % en mole ou moins d'autres glycols comprenant :

(i) 5 à moins de 17 % en mole de résidus de néopentylglycol ;

(ii) 2 à moins de 10 % en mole de résidus de 1,4-cyclohexanediméthanol ;

(iii) 1 à moins de 5 % en mole de résidus de diéthylène glycol totaux dans la composition de polyester finale ;

dans lequel le % en mole total du composant acide dicarboxylique est de 100 % en mole, et

dans lequel le % en mole total du composant diol est de 100 % en mole.

3. Film cristallisable comprenant une composition de polyester comprenant :

au moins un polyester qui comprend :

(a) un composant acide dicarboxylique comprenant :

(i) 70 à 100 % en mole de résidus d'acide téréphtalique

(ii) 0 à 30 % en mole de résidus d'acide dicarboxylique aromatique et/ou aliphatique ayant jusqu'à 20 atomes de carbone ; et

(b) un composant diol comprenant :

(i) 1 à 30 % en mole de résidus de néopentylglycol ;

(ii) 1 à moins de 30 % en mole de résidus de 1,4-cyclohexanediméthanol ; et

(iii) 1,5 à 6 % en mole de résidus de diéthylène glycol; et

dans lequel le reste du composant glycol comprend :

(iv) des résidus d'éthylène glycol, et

(v) 0 à 20 % en mole des résidus d'au moins un glycol modificateur;

dans lequel le % en mole total du composant acide dicarboxylique est de 100 % en mole, et

dans lequel le % en mole total du composant glycol est de 100 % en mole.

4. Film cristallisable selon l'une quelconque des revendications 1 à 3, dans lequel la viscosité inhérente du polyester est comprise entre 0,68 et 0,75 dL/g telle que déterminée dans un mélange 60/40 (poids/poids) de phénol/tétrachloroéthane à une concentration de 0,5 g/dL à 25 °C, et dans lequel le polyester a une $T_g$ comprise entre 72 °C et 77 °C telle que déterminée à l'aide d'un calorimètre différentiel à balayage TA DSC 2920 de chez Thermal Analyst Instruments à une vitesse de balayage de 20 °C/min.

5. Film cristallisable selon l'une quelconque des revendications 1 ou 3, dans lequel lesdits résidus de 1,4-cyclohexanediméthanol sont présents en une quantité de 2 à 5 % en mole, les résidus de diéthylène glycol sont présents en une quantité de 5 % en mole ou moins, les résidus de néopentylglycol en une quantité de 10 à 15 % en mole, et les résidus d'éthylène glycol sont présents en une quantité supérieure à 75 % en mole.

6. Film cristallisable selon l'une quelconque des revendications 1 à 5, dans lequel ledit film est étiré dans au moins une direction ; ou

dans lequel ledit film est étiré et orienté dans au moins une direction ; ou

dans lequel ledit film est recuit, préférentiellement

dans lequel ledit film est recuit à une température comprise entre environ 75 °C et environ 110 °C.

7. Film cristallisable selon l'une quelconque des revendications 1 à 6, dans lequel ledit film est étiré dans au moins une direction et le film étiré a un point de fusion cristallin induit par déformation de 200 °C ou plus, le point de fusion cristallin induit par déformation étant déterminé à l'aide d'un calorimètre différentiel à balayage TA DSC 2920 de chez Thermal Analyst Instruments à une vitesse de balayage de 20 °C/min, le point de fusion ayant été mesuré lors du premier chauffage sur des échantillons étirés.

8. Film cristallisable selon l'une quelconque des revendications 1 à 7, dans lequel ledit film a un retrait dans la direction de retrait principale de 60 % ou plus lorsqu'il est immergé dans de l'eau à 85 °C pendant 10 secondes, le retrait étant déterminé par placement d'un échantillon de film carré de 50 mm par 50 mm dans de l'eau sans restreindre le retrait, quelle que soit la direction, dans lequel le pourcentage de retrait est calculé par l'équation suivante :

$$\% \text{ retrait} = [(50 \text{ mm} - \text{longueur après retrait})/50 \text{ mm}] \times 100 \%.$$

9. Film cristallisable selon l'une quelconque des revendications 1 à 8, dans lequel ledit film a une force de rétraction de 5 MPa ou plus, la force de rétraction étant mesurée selon la norme ISO 14616 à l'aide d'un dispositif d'essai de rétraction thermique LabThink FST-02 en MPa à la température utilisée pour étirer le film.

10. Film cristallisable selon l'une quelconque des revendications 1 à 9, qui est orienté dans une ou plusieurs directions.

11. Film cristallisable selon l'une quelconque des revendications 1 à 10, dans lequel le film a un retrait dans la direction de retrait principale compris entre 50 et 90 % et un retrait dans la direction orthogonale à la direction de retrait principale de 10 % ou moins lorsqu'il est immergé dans de l'eau à 95 °C pendant 10 secondes, le retrait étant déterminé par placement d'un échantillon de film carré de 50 mm par 50 mm dans de l'eau sans restreindre le retrait quelle que soit la direction, dans lequel le pourcentage de retrait est calculé par l'équation suivante :

$$\% \text{ retrait} = [(50 \text{ mm} - \text{longueur après retrait})/50 \text{ mm}] \times 100 \%.$$

12. Film d'operculage, récipient moulé par extrusion-soufflage, feuille extrudée, feuille thermoformée, film d'emballage flexible pour sachets à maintien vertical comprenant le film cristallisable selon l'une quelconque des revendications 1 à 11 ; ou

article manufacturé, article façonné, récipient, bouteille en plastique, bouteille en verre, emballage, batterie, récipient de remplissage à chaud ou article industriel sur lequel/laquelle est appliquée une étiquette ou un manchon, ladite étiquette ou ledit manchon comprenant le film cristallisable selon l'une quelconque des revendications 1 à 11.

13. Feuille thermoformée, ayant une épaisseur comprise entre 0,25 mm et 6,4 mm comprenant une composition de polyester selon l'une des revendications 1 à 3.

14. Feuille thermoformée selon la revendication 13, dans laquelle le polyester a une $T_g$ comprise entre 65 °C et 90 °C telle que déterminée à l'aide d'un calorimètre différentiel à balayage TA DSC 2920 de chez Thermal Analyst Instruments à une vitesse de balayage de 20 °C/min.

15. Feuille thermoformée selon la revendication 14, dans laquelle la somme de la teneur en diol dans le polyester final est comprise entre 5 et 24 % en mole, dans laquelle la teneur totale en diol est de 100 % en mole.

16. Feuille thermoformée selon la revendication 15, dans laquelle la somme de la teneur en diol dans le polyester final est comprise entre 15 et 20 % en mole, dans laquelle la teneur totale en diol est de 100 % en mole.

17. Feuille thermoformée selon la revendication 13 comprenant la composition de polyester selon l'une des revendications 1 ou 3

dans laquelle lesdits résidus de 1,4-cyclohexanediméthanol sont présents en une quantité de 2 à 5 % en mole, les résidus de diéthylène glycol sont présents en une quantité de 5 % en mole ou moins, les résidus de néopentylglycol en une quantité de 10 à 15 % en mole, et les résidus d'éthylène glycol sont présents en une quantité supérieure à 75 % en mole.

18. Feuille thermoformée selon l'une quelconque des revendications 13 à 17, dans laquelle ladite feuille thermoformée ou article thermoformé a un point de fusion cristallin compris entre 190 °C et 225 °C, le point de fusion cristallin induit par déformation étant déterminé à l'aide d'un calorimètre différentiel à balayage TA DSC 2920 de chez Thermal Analyst Instruments à une vitesse de balayage de 20 °C/min, le point de fusion ayant été mesuré lors du premier chauffage.

19. Article moulé ou façonné préparé à partir de la feuille thermoformée selon l'une quelconque des revendications 13 à 18, préférentiellement

dans lequel ledit article est choisi parmi un emballage de dispositif médical, un emballage médical, un emballage de produit de santé, des produits de restauration commerciale, des plateaux, des récipients, des casseroles, des gobelets, des boîtes de stockage, des bouteilles, des robots de cuisine, des bols de mélangeur et de batteur, des ustensiles, des bouteilles d'eau, des bacs à légumes, des pièces de machine à laver, des pièces de réfrigérateur, des pièces d'aspirateur, des lentilles ou montures ophtalmiques ou des jouets.

20. Flux de recyclage de polyester comprenant des paillettes de poly(téréphtalate d'éthylène) recyclé, auquel est mélangé au moins 0,1 pour cent en poids de film cristallisable recyclé selon l'une quelconque des revendications 1 à 11 et/ou une feuille thermoformée recyclée selon la revendication 13, préférentiellement dans lequel ledit flux de recyclage est conforme au protocole « Critical Guidance Protocol for Clear PET Articles with Labelsand Closures », du 11 avril 2019, document n° PET-CG-02.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011091705 A1
- US 2014162042 A1
- WO 9947605 A1
- EP 3572451 A1
- US 2009227735 A1
- EP 2365025 A1
- US 3772405 A
- US 2720507 A
- US 5372864 A
- US 5384377 A
- US 10329393 B
- US 6846440 B
- US 6551699 B
- US 6551688 B
- US 6068910 A
- US 3426754 A
- US 3944699 A
- US 4138459 A
- US 4582752 A

- US 4632869 A
- US 4770931 A
- US 5176954 A
- US 5435955 A
- US 5843578 A
- US 6004664 A
- US 6287680 B
- US 6500533 B
- US 6720085 B
- US 20010036545
- US 20030068453
- US 20030165671
- US 20030170427
- JP 61037827 A
- JP 63193822 A
- JP 2004181863 A
- EP 0581970 B1
- EP 0214859 A2

**Non-patent literature cited in the description**

- **THRONE, JAMES**. Technology of Thermoforming. Hanser Publishers, 1996, 16-29